(19) Europäisches Patentamt
European Patent Office
Office européen des brevets

(11) EP 1 443 594 A2

(12) EUROPEAN PATENT APPLICATION

(43) Date of publication:
**04.08.2004 Bulletin 2004/32**

(51) Int Cl.⁷: **H01Q 3/26**, H01Q 19/28, H01Q 21/29

(21) Application number: **04000499.6**

(22) Date of filing: **13.01.2004**

(84) Designated Contracting States:
**AT BE BG CH CY CZ DE DK EE ES FI FR GB GR HU IE IT LI LU MC NL PT RO SE SI SK TR**
Designated Extension States:
**AL LT LV MK**

(30) Priority: **31.01.2003 JP 2003025060**

(71) Applicant: **FUJITSU LIMITED**
**Kawasaki-shi, Kanagawa 211-8588 (JP)**

(72) Inventors:
- **Nakaya, Yuuta**
**Kawasaki-shi Kanagawa 211-8588 (JP)**
- **Toda, Takeshi**
**Kawasaki-shi Kanagawa 211-8588 (JP)**
- **Oishi, Yasuyuki**
**Kawasaki-shi Kanagawa 211-8588 (JP)**

(74) Representative: **HOFFMANN - EITLE**
**Patent- und Rechtsanwälte**
**Arabellastrasse 4**
**81925 München (DE)**

# (54) Method and apparatus for controlling array antenna, and computer-readable storage medium

(57) A method of controlling an array antenna part having a plurality of antenna elements arranged at a predetermined interval, includes the steps of obtaining a predetermined evaluation function with respect to each of weighting coefficients to be applied to incoming signals arriving at a predetermined number of antenna elements, by perturbing each of the weighting coefficients at a sampling interval which is within one symbol time, and adjusting each of the weighting coefficients based on the evaluation function.

FIG.4

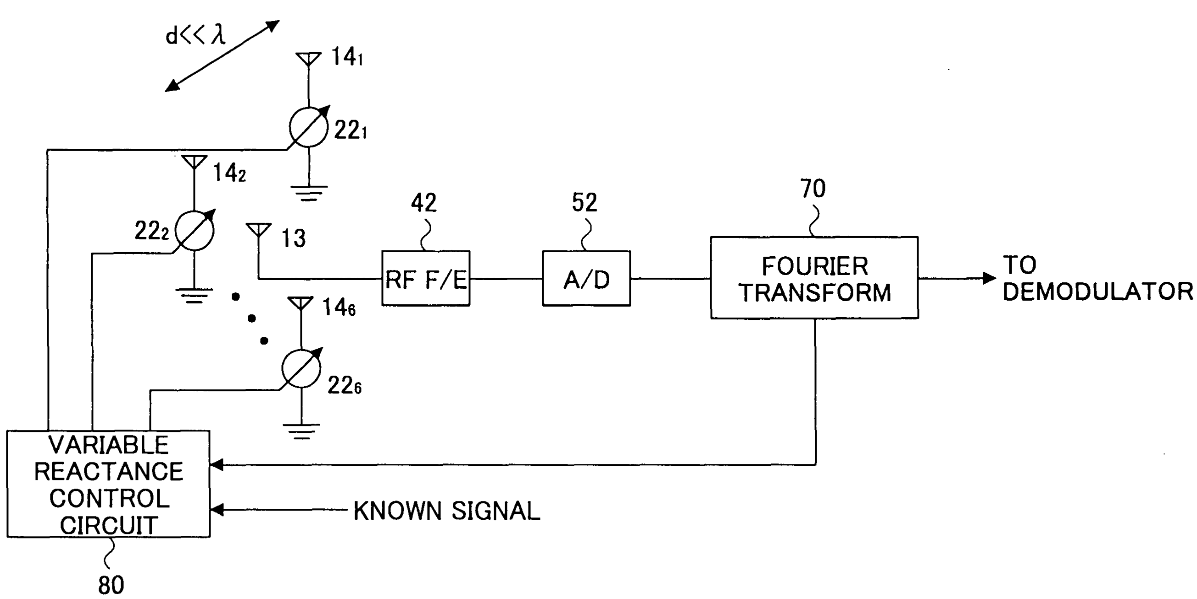


EP 1 443 594 A2

## Description

BACKGROUND OF THE INVENTION

This application claims the benefit of a Japanese Patent Application No.2003-025060 filed January 31, 2003, in the Japanese Patent Office, the disclosure of which is hereby incorporated by reference.

1. Field of the Invention

The present invention generally relates to methods and apparatuses for controlling array antennas and computer-readable storage media, and more particularly to an array antenna control method and an array antenna control apparatus for controlling an array antenna in a mobile station or a base station of a wireless Local Area Network (LAN) system, a mobile communication system and the like, and to a computer-readable storage medium which stores a program for causing a computer to control an array antenna.

2. Description of the Related Art

Recently, due to increased demands on large-capacity communications via the Internet, rapid technical developments have been made to increase the capacity of wireless networks such as portable telephone networks and wireless LANs. In order to realize a high-speed wireless communication, it is necessary to overcome the fading caused by multipath propagation of radio waves. The application of the Orthogonal Frequency Division Multiplexing (OFDM) is regarded as a promising countermeasure against the fading.

The OFDM is one of multicarrier modulation techniques, and the subcarriers are arranged to maintain a mutual orthogonal relationship. For this reason, it is possible to improve the frequency utilization efficiency compared to the conventional transmission using the single multicarrier. In addition, the OFDM is less likely to be affected by the frequency selective fading because the transmission speed may be regarded as being low-speed. Furthermore, since a guard interval is inserted at the beginning of each symbol, it is possible to reduce the effects of delayed waves.

Accordingly, the OFDM is uneasily affected by the multipath environment. However, when interference waves, such as Doppler shift waves subjected to Doppler frequency deviation due to moving, interference waves from other systems and delayed waves exceeding the guard interval, are received, Inter-Carrier Interference (ICI), InterSymbol Interference (ISI) and the like are generated, to greatly deteriorate the receiving characteristics such as the Bit Error Rate (BER). Hence, interference suppression techniques using adaptive array antennas have been proposed, as will be described hereinafter with reference to FIGS. 1 and 2.

FIG. 1 is a system block diagram showing a structure of an example of a conventional adaptive antenna control apparatus. The conventional adaptive antenna control apparatus shown in FIG. 1 controls an array antenna section which is formed by a plurality of antenna elements $10_1$ through $10_M$, and includes antenna weighting circuits $20_1$ through $20_M$, a combining circuit (Σ) 30, a radio frequency front end (RF F/E) section 40, a an analog-to-digital (A/D) converter 50, and a weighting control circuit 60. Signals which are combined in the combining circuit 30, and an output signal of the combining circuit 30 is subjected to processes such as band limitation and frequency conversion in the RF F/E section 40, before being converted into a digital signal by the A/D converter 50. The weighting control circuit 60 adaptively controls the antenna weighting circuits $20_1$ through $20_M$ of the array antenna elements $10_1$ through $10_M$, so that the signal after the A/D conversion (that is, the receiver input) has a largest Signal-To-Interference Plus Noise (SINR). As a result, a directional beam is formed with respect to the desired wave, and a null antenna directivity is formed with respect to the interference wave to null out the interference wave.

The adaptive array antenna control apparatus described above has a complex hardware structure and is expensive, and in addition, it is difficult to reduce the power consumption. Thus, it is difficult to apply the adaptive array antenna control apparatus to small wireless terminals such as a portable telephone set, thereby limiting the application of the adaptive array antenna control apparatus.

An adaptive array antenna control apparatus which enables both the cost and the power consumption to be reduced, has also been proposed. This proposed adaptive array antenna control apparatus requires only one power supply system and one receiving system, thereby making the hardware structure simple and suited for use in small wireless terminals such as the portable telephone set. This proposed adaptive array antenna control apparatus is often referred to as an Electronically Steerable Parasitic Array Radiator (ESPAR) antenna. The ESPAR antenna arranges passive antenna elements in a circular manner around an active antenna element, and electronically controls reactances of variable reactances load-terminating the passive antenna elements, so as to control the radiation beam pattern within the horizontal plane (horizontal radiation pattern).

FIG. 2 is a system block diagram showing a structure of an example of a conventional adaptive array antenna control apparatus for the ESPAR antenna. The adaptive array antenna control apparatus shown in FIG. 2 controls an array antenna section which is formed by one active antenna element 11 and three passive antenna elements $12_1$ through $12_3$, and includes variable reactance circuits $21_1$ through $21_3$, a radio frequency front end (RF F/E) section 41, an analog-to-digital (A/D) converter 51, and a variable reactance control circuit 61. A received signal from the active antenna element 11 is passed through the RF F/E section 41 and is converted into a digital signal by the A/D converter 51. In addition, the received signal from the active antenna element 11 is affected by electromagnetic mutual coupling of the surrounding passive antenna elements $12_1$ through $12_3$. The variable reactance control circuit 61 adaptively controls the variable reactance circuits $21_1$ through $21_3$ of the passive antenna elements $12_1$ through $12_3$ so that the signal after the A/D conversion (that is, the receiver input) has a largest SINR. As a result, a directional beam is formed with respect to the desired wave, and a null antenna directivity is formed with respect to the interference wave to null out the interference wave.

As described above, the received signals cannot be obtained from all of the antenna elements of the ESPAR antenna. For this reason, the control algorithm employed for the normal adaptive array antenna cannot be used for the ESPAR antenna. Hence, a steepest gradient algorithm using the perturbation method has been proposed in Cheng et al., "Adaptive Beamforming of ESPAR Antenna Based on Steepest Gradient Algorithm", IEICE TRANS. COMMUN., VOL.E84-B, NO.7 July 2001, as a control algorithm which takes into consideration the characteristics of the ESPAR antenna. The control algorithm using the perturbation method changes the reactance of one passive antenna element by a predetermined amount, and while observing a predetermined evaluation function, the reactance is changed in a direction such that the reception characteristics after the change improve from that before the change. Furthermore, a similar operation is performed with respect to the other passive antenna elements, so as to obtain the desired directivity.

FIG. 3 is a diagram for explaining an antenna weighting time based on the perturbation method. More particularly, FIG. 3 shows weighting perturbation times of the passive antenna elements $12_1$ through $12_3$ for a case where the signal received by the active antenna element 11 is an OFDM signal in the ESPAR antenna employing the control algorithm which uses the perturbation method.

According to the OFDM, the signal is modulated and transmitted in predetermined units called symbols. At the time of the reception, it is necessary to carry out a demodulation process by sectioning the received signal for every symbol. Hence, according to the conventional control algorithm which uses the perturbation method, the reactances of the passive antenna elements $12_1$ through $12_3$ are perturbed for every symbol. For example, the reactance of the first passive antenna element $12_1$ is perturbed at the first symbol, the reactance of the second passive antenna element $12_2$ is perturbed at the next symbol, the reactance of the third passive antenna element $12_3$ is perturbed at the next symbol, ..., as shown in FIG. 3, so that the reactance of one passive antenna element is perturbed for every symbol. Moreover, the reactance of each of the passive antenna elements $12_1$ through $12_3$ is updated so that the SINR increases, while observing the virtual subcarrier component (subcarrier not used for the data communication).

However, if the control algorithm which uses the perturbation method is employed for a plurality of passive antenna elements, it requires a number of symbols amounting to the number of antenna elements to update the reactance of each passive antenna elements. For this reason, there were problems in that it requires a long time for the control algorithm to converge, and that the interference waves cannot be suppressed sufficiently until the control algorithm converges.

## SUMMARY OF THE INVENTION

Accordingly, it is a general object of the present invention to provide a novel and useful array antenna control method, array antenna control apparatus and computer-readable storage medium, in which the problems described above are eliminated.

Another and more specific object of the present invention is to provide an array antenna control method, an array antenna control method and a computer-readable storage medium, which can update antenna weighting (weighting coefficients) at a high speed.

Still another object of the present invention is to provide a method of controlling an array antenna part having a plurality of antenna elements arranged at a predetermined interval, comprising obtaining a predetermined evaluation function with respect to each of weighting coefficients to be applied to incoming signals arriving at a predetermined number of antenna elements, by perturbing each of the weighting coefficients at a sampling interval which is within one symbol time; and adjusting each of the weighting coefficients based on the evaluation function. According to the array antenna control method of the present invention, it is possible to update the antenna weighting coefficients at a high speed, and converge the optimizing algorithm at a high speed while suppressing the interference wave.

A further object of the present invention is to provide an array antenna control apparatus for controlling an array antenna part having a plurality of antenna elements arranged at a predetermined interval, comprising a control unit having a part to obtain a predetermined evaluation function with respect to each of weighting coefficients to be applied to incoming signals arriving at a predetermined number of antenna elements, by perturbing each of the weighting coefficients at a sampling interval which is within one symbol time, and a part to adjust each of the weighting coefficients based on the evaluation function. According to the array antenna control method of the present invention, it is possible to update the antenna weighting coefficients at a high speed, and converge the optimizing algorithm at a high speed while suppressing the interference wave.

Another object of the present invention is to provide an array antenna control apparatus for controlling an array antenna part having,a plurality of antenna elements arranged at a predetermined interval, comprising control means comprising means for obtaining a predetermined evaluation function with respect to each of weighting coefficients to be applied to incoming signals arriving at a predetermined number of antenna elements, by perturbing each of the weighting coefficients at a sampling interval which is within one symbol time, and means for adjusting each of the weighting coefficients based on the evaluation function. According to the array antenna control apparatus of the present invention, it is possible to update the antenna weighting coefficients at a high speed, and converge the optimizing algorithm at a high speed while suppressing the interference wave.

Still another object of the present invention is to provide a computer-readable storage medium which stores a program for causing a computer to control an array antenna part having a plurality of antenna elements arranged at a predetermined interval, the comprising a procedure causing the computer to obtain a predetermined evaluation function with respect to each of weighting coefficients to be applied to incoming signals arriving at a predetermined number of antenna elements, by perturbing each of the weighting coefficients at a sampling interval which is within one symbol time; and a procedure causing the computer to adjust each of the weighting coefficients based on the evaluation function. According to the computer-readable storage medium of the present invention, it is possible to update the antenna weighting coefficients at a high speed, and converge the optimizing algorithm at a high speed while suppressing the interference wave.

Other objects and further features of the present invention will be apparent from the following detailed description when read in conjunction with the accompanying drawings.

## BRIEF DESCRIPTION OF THE DRAWINGS

FIG. 1 is a system block diagram showing a structure of an example of a conventional adaptive antenna control apparatus;

FIG. 2 is a system block diagram showing a structure of an example of a conventional adaptive array antenna control apparatus for an ESPAR antenna;

FIG. 3 is a diagram for explaining an antenna weighting time based on the perturbation method;

FIG. 4 is a system block diagram showing a structure of an embodiment of the array antenna control apparatus according to the present invention;

FIG. 5 is a diagram showing a subcarrier arrangement of an OFDM signal in conformance with the IEEE802.11a;

FIG. 6 is a diagram showing variable reactance perturbation times of passive antenna elements;

FIG. 7 is a diagram for explaining a variable reactance perturbation time of the passive antenna element;

FIG. 8 is a flow chart for explaining a reactance control process of a variable reactance control circuit with respect to the passive antenna elements;

FIG. 9 is a diagram showing a structure of a PLCP preamble in conformance with IEEE802.11a;

FIG. 10 is a diagram showing a convergence characteristic of an evaluation function $\rho_m(n)$ with respect to a number of tries, n, in a state where no noise exists;

FIG. 11 is a diagram showing a horizontal directivity pattern in a state shown in FIG. 14 where a desired wave signal S (1 wave) arrives from a 0° direction and an interference wave I (1 wave) arrives from a 100° direction, in the state where no noise exists;

FIG. 12 is a diagram showing a convergence characteristic of the evaluation function $\rho_m(n)$ with respect to the number of tries, n, in a state where noise exists;

FIG. 13 is a diagram showing a horizontal directivity pattern in the state shown in FIG. 14 where the desired wave signal S (1 wave) arrives from the 0° direction and the interference wave I (1 wave) arrives from the 100° direction, in the state where the noise exists;

FIG. 14 is a diagram showing a model of signal sources used in obtaining simulation results for the embodiment of the array antenna control apparatus;

FIG. 15 is a diagram for explaining a weighting coefficient updating process which is carried out by selecting a diversity branch; and

FIG. 16 is a diagram for explaining a weighting coefficient updating process which is carried out by combining diversity branches.

DESCRIPTION OF THE PREFERRED EMBODIMENTS

A description will now be given of an embodiment of an array antenna control method according to the present invention, an embodiment of an array antenna control apparatus according to the present invention, and an embodiment of a computer-readable storage medium according to the present invention, by referring to FIGS. 4 through 16.

In this embodiment, the present invention is applied to a wireless communication system employing the multicarrier transmission, such as the wireless LAN system in conformance with the IEEE 802.11a standard (employing OFDM), which converts a transmitting data sequence into a plurality of data sequences by a serial-to-parallel conversion and makes a wireless parallel transmission of the plurality of data sequences by use of a plurality of carriers having mutually different frequencies. In addition, it is assumed for the sake of convenience that this embodiment uses the frame format prescribed by the IEEE 802.11a standard.

The present invention relates to the array antenna control for an array antenna which is used in such a wireless communication system.

FIG. 4 is a system block diagram showing a structure of this embodiment of the array antenna control apparatus. The array antenna control apparatus shown in FIG. 4 controls an array antenna section which is formed by one active antenna element and six passive antenna elements $14_1$ through $14_6$, and includes variable reactance circuits $22_1$ through $22_6$, a radio frequency front end (RF F/E) section 42, an analog-to-digital (A/D) converter 52, a Fourier transform section 70, and a variable reactance control circuit 80. The variable reactance control circuit 80 may be formed by a digital computing unit such as a computer, for example.

In FIG. 4, a radio signal transmitted from an OFDM transmitter of the other (transmitting) end is received by the active antenna element 13. The received signal is input to the FR F/E section 42 which carries out processes such as low-noise amplification and frequency conversion into the intermediate frequency or base band, and then converted into a digital signal by the A/D converter 52. The digital signal on the time base (time-based digital signal), which is output from the A/D converter 52, is converted into a signal on the frequency base (frequency-based signal) by the Fourier transform section 70, before being input to the variable reactance control circuit 80. In addition, the output of the Fourier transform section 70 is supplied to a next stage, such as a demodulator, to be subjected to a data demodulation process and the like. The variable reactance control circuit 80 computes a correlation between the received signal which has been converted into the signal on the frequency base (frequency-based signal) and a predetermined known signal which will be described later, and updates weighting coefficients of the passive antenna elements $14_1$ through $14_6$. In this case, the weighting coefficients are the reactances of the passive antenna elements $14_1$ through $14_6$. The updated weighting coefficients, that is, the updated reactances, are supplied to the variable reactance circuits $22_1$ through $22_6$ to control the directivity.

The weighting coefficients of the passive antenna elements $14_1$ through $14_6$ vary bias voltages applied to variable capacitance diodes, so as to vary electrostatic capacitances of the variable capacitance diodes. Hence, it is possible to vary an electrical length of variable reactance elements of the passive antenna elements $14_1$ through $14_6$ in comparison to that of the active antenna element 13, and vary the radiation beam pattern of the array antenna.

Next, a description will be given of a reactance control process (updating process) for the passive antenna elements 141 through 146, which is carried out by the array antenna control apparatus described above, by referring to FIG. 5. FIG. 5 is a diagram showing a subcarrier arrangement of the OFDM signal in conformance with the IEEE802.11a.

In FIG. 5, the number Ns of subcarriers is "64", and subcarriers which actually transmit the data are indicated by solid lines with indexes -26 through -1 and 1 through 26, while virtual subcarriers which actually do not transmit the data are indicated by broken lines with indexes -32 through -27, 0 and 27 through 31. Hence in this particular case, the communication is made using 52 subcarriers.

Next, a description will be given of variable reactance perturbation times (or perturbation speeds) of the passive antenna elements $14_1$ through $14_6$, by referring to FIG. 6. FIG. 6 is a diagram showing the variable reactance perturbation times of the passive antenna elements $14_1$ through $14_6$.

In this embodiment, an 8-times over-sampling is performed in the A/D converter 52, in order to update the antenna weighting (reactance of the variable reactance) for every symbol. In other words, the number of samples in the A/D conversion is 512 (= (number of subcarriers) · 8 = 64·8) within one symbol time (3.2 μs).

When one symbol is formed by 512 sampled data this manner, the effects of the perturbation of the passive antenna elements $14_1$ through $14_6$ on the reception characteristics is observed. More particularly, only a reactance x1 of the first passive antenna element $14_1$ (#1) is perturbed by a small amount $\Delta x$ at the first sample, and the received signal is measured thereafter. Next, at the second sample, a reactance x2 of the second passive antenna element $14_2$ (#2) is perturbed by the small amount $\Delta x$, and the received signal is measured thereafter. Such an operation is carried out up to the sixth sample, so that a reactance x6 of the sixth passive antenna element $14_6$ (#6) is perturbed by the small amount $\Delta x$ at the sixth sample, and the received signal is measured thereafter. For the remaining seventh and eighth samples, the received signal is measured without perturbing the reactance of the passive antenna element. In this embodiment, such a process is carried out with a period of 8 samples, up to the last sample, that is, the 512th sample. Thereafter, the effects of the perturbation of the passive antenna elements $14_1$ through $14_6$ on the reception characteristics is observed.

FIG. 7 is a diagram for explaining a variable reactance perturbation time (or perturbation speed) of the passive antenna element $14_1$.

As described above, 1 symbol is formed by 512 sampled data in this embodiment. In the following description, 1 symbol data at the nth try is denoted by $g(i\Delta T, n)$, where i = 1, 2, ..., 512 and $\Delta T$ denotes the sampling interval. FIG. 7 shows the data decimation method for a case where the first passive antenna element at the nth try, that is, the passive antenna element $14_1$ (m = 1, #1) is perturbed.

As shown in FIG. 7, in the case of the passive antenna element $14_1$, the variable reactance is perturbed at the first sample, $(g(\Delta T, n))$, the ninth sample $(g(9\Delta T, n))$, ..., and the 505th sample $(g(505\Delta T, n))$, and all other samples are decimated. In other words, the data is decimated for every 7 samples, and the data of only the passive antenna element $14_1$ is obtained. The above described process is similarly carried out with respect to the other passive antenna elements $14_2$ through $14_6$.

Next, a description will be given of a reactance control process with respect to the passive antenna elements, which is carried out in the array antenna control apparatus, by referring to FIG. 8. FIG. 8 is a flow chart for explaining the reactance control process of the variable reactance control circuit 80 with respect to the passive antenna elements.

This embodiment of the computer-readable storage medium stores a program for causing a computer to carry out at least the process of the variable reactance control circuit 80. Of course, the program stored in the computer-readable storage medium may cause the computer to additionally carry out the process of other parts of the array antenna control apparatus. Any recording medium capable of storing a program in a computer-readable manner may be used for the computer-readable storage medium. For example, semiconductor memory devices, magnetic recording media, optical recording media and magneto-optic recording media may be used as the recording medium.

First, the variable reactance control circuit 80 sets initial values in steps S1 through S3 shown in FIG. 8. More particularly, the step S1 sets a number n of tries to n = 1, the step S2 sets an nth sample $\alpha$ to $\alpha = 0$, and the step S3 sets an identification number m of the passive antenna element to m = 0.

After setting the initial values, the variable reactance control circuit 80 carries out a step S4 and subsequent steps. The step S4 increments the identification number m of the passive antenna element by +1 (first, the passive antenna element $14_1$ (#1) is selected). A step S5 pertubates a reactance xm (= x1) of the variable reactance of the passive antenna element $14_1$ by $\Delta x$, where $\Delta x$ denotes a small amount for changing the voltage applied to the variable capacitance diode by a small amount.

After changing the reactance x1 by the small amount $\Delta x$, the variable reactance control circuit 80 increments the nth sample $\alpha$ by +1 in a step S6, and measures a received signal y $(y(\Delta T, n))$ of the passive antenna element $14_1$ in a step S7. Thereafter, a step S8 changes the reactance x1 by a small amount $-\Delta x$ to return the reactance x1 to the original reactance $(x1 - \Delta x)$.

Next, the variable reactance control circuit 80 decides whether or not the nth sample $\alpha$ is greater than 512 $(= 64 \cdot 8)$ in a step S9. If the decision result in the step S9 is NO, a step S10 decides whether or not the identification number m of the passive antenna element is greater than "6". If the decision result in the step S10 is NO, the process returns to the step S4.

On the other hand, if the decision result in the step S10 is YES, a step S14 decides whether or not the identification number m of the passive antenna element is greater than "8". If the decision result in the step S14 is NO, the variable reactance control circuit 80 increments the nth sample $\alpha$ by +1 in a step S15. After the step S15, a step S16 increments the identification number m of the passive antenna element by +1, and a step S17 measures the received signal y.

If the decision result in the step S14 is YES, the process returns to the step S3, and the identification number m of the passive antenna element is reset to 0.

Accordingly, up to the first through sixth samples ($\alpha$ = 1, ..., 6), the received signal y is measured by perturbing the reactances x1 through x6 of the passive antenna elements $14_1$ through $14_6$ by $\Delta x$ for each sample. At the seventh and eighth samples ($\alpha$ = 7, 8), the received signal is measured without perturbing the reactances of the passive antenna elements.

The process advances to a next step S11 when the variable reactance control circuit 80 carries out the loop process described above at a period of 8 samples up to the 512th sample and the decision result in the step S9 becomes YES. The step S11 carries out an updating process to update the reactances x1 through x6 of the passive antenna elements $14_1$ through $14_6$.

In the step S11, the received signal on the time base (time-based received signal) at each of the passive antenna elements $14_1$ through $14_6$ which is measured after the perturbation and subjected to the Fourier transform according to the following formula (1), so as to convert the time-based received signal into the received signal on the frequency base (frequency-based received signal), where m denotes the identification number of the passive antenna element, Γ denotes the sample number from 1 to 512, and β denotes the subcarrier.

$$Gm(\Gamma, n) = \sum_{\beta=1}^{64} g((8\beta-8+m)\Delta T, n) (\exp\{-j2\Pi\Gamma(\beta)/64 \quad --- (1)$$

Thereafter, a correlation between the frequency-based received signal Gm and a frequency-based known signal is obtained from the following formulas (2) and (3).

$$\rho_m(n) = 1 - |\sum_{\beta=1}^{64} G_m(\beta, n)d^*_\beta(m)| / [\{\sum_{\beta=1}^{64} G_m(\beta, n)G^*_m(\beta, n)\}\{\sum_{\beta=1}^{64} d_\beta(m)d^*_\beta(m)\}^{1/2}]^{1/2}$$

$$(m = 1, 2, \ldots, 6) \quad --- (2)$$

$$\rho_0 = 1 - |\sum_{\beta=1}^{64} G'(\beta, n)d^*_\beta(8)| / [\{\sum_{\alpha=1}^{64} G'(\beta, 8)(G')^*(\beta, 8)\}\{\sum_{\beta=1}^{64} d_\beta(8)d^*_\beta(8)\}^{1/2}]^{1/2}$$

$$(m = 1, 2, \ldots, 6) \quad --- (3)$$

In the formula (2), $\rho_m(n)$ indicates a correlation coefficient for a case where the mth passive antenna element (passive antenna element having the identification number m = 1, ..., 6) is perturbed, where * denotes a conjugate complex number, and $d^*_\beta(m)$ denotes a known signal obtained by obtaining the complex conjugate.

In the formula (3), $\rho_0$ indicates a correlation coefficient for a case where the mth passive antenna element (passive antenna element having the identification number m = 1, ..., 6) is not perturbed, where * denotes the conjugate complex number, and $d^*_\beta(m)$ denotes the known signal obtained by obtaining the complex conjugate.

In this particular case, a long symbol of a Physical Layer Convergence Protocol (PLCP) preamble in conformance with the IEEE802.11a is used as the known signal $d_\beta(m)$. In other words, a signal for transmitting control information within a frame employed by a predetermined system or protocol, is used to generate the known signal. The PLCP preamble is used for a training sequence to achieve various synchronizations including clock synchronization when an OFDM modem receives a signal, and is formed by 10 short symbols (amounting to 8 μs and also called short training symbols) and 2 long symbols (amounting to 8 μs and also called long training symbols). The Fourier transform 70 shown in FIG. 4 corresponds to a demodulator portion of the OFDM modem. FIG. 9 is a diagram showing a structure of the PLCP preamble in conformance with the IEEE802.11a. The long training symbols are transmitted using 52 subcarriers, and the following known signal pattern $F_{-26\ldots26}$ is converted into a time-based signal in an Inverse Fast Fourier Transform (IFFT) section of the OFDM modem.

$F_{-26\ldots26}$ = [11-1-111-11-1111111-1-111-11-1111101-

1-111-11-11-1-1-1-1-111-1-11-11-11111]

The signal pattern $F_{-26...26}$ is mapped to 52 subcarriers, and is formed into the transmitting signal via a transmission power means of the OFDM modem. The transmission power means converts a frequency-based signal into a time-based signal. In this particular case, "0" is inserted in the data of the signal pattern $F_{-26...26}$ so as to form 64 subcarriers, and the resulting signal pattern is defined by $F_i$ ( $F_i$ ( i=1, ..., 64)). Accordingly, the signal pattern F after the redefinition becomes as follows.

F = [00000011-1-111-11-1111111-1-111-11-

1111101-1-111-11-11-1-1-1-1-111-1-11-11-1111100000]

The signal pattern $F_i$ is a time-based signal, and needs to be converted into a frequency-based signal in order to be used for the correlation operation (computation) on the frequency base. Hence, a correction coefficient $C_i$ is multiplied to the signal pattern $F_i$ in order to obtain the known signal $d_\beta$ (m) . For the sake of convenience, β will be replaced by i in the following description, and the known signal will be denoted by $d_i(m)$ as may be seen from the following formula (4).

$$d_i(m) \equiv F_i \cdot C_i\,(m)\ ,\ (i = 1, 2, ..., 64) \qquad (4)$$

In the formula (4), $F_i$ denotes the long symbol of the PLCP preamble, $C_i$ denotes the correction coefficient, and m denotes the identification number (1, ..., 6) of the passive antenna element.

The correction coefficient $C_i$ can be obtained from the following formula (5).

$$C_i(m) = \exp\,[-j2\Pi\{i/(64 \cdot 8)\}(8-m)],$$

$$(i = 1, 2, ..., 64) \qquad (5)$$

In the formula (5), m denotes the identification number (1, ..., 6) of the passive antenna element.

Next, a gradient vector $grad\rho_m(n)$ is of the correlation coefficient is obtained as an evaluation function, using $\rho_m(n)$ and $\rho_0$ described above. The gradient vector $grad\rho_m(n)$ is defined by the following formula (6), where $\Delta x$ denotes a predetermined shifting amount of the reactance $x_m(n)$ of the mth passive antenna element (m = identification number 1, ..., 6 of the passive antenna element).

$$grad\rho_m(n) = \{\rho_m(n) - \rho_0(n)\} / \Delta x \qquad (6)$$

A gradient vector gradP(n) of each of the passive antenna elements $14_1$ through $14_6$ is defined by the following formula (7), where T denotes the transpose.

$$grad\mathrm{P}\ (n) = [grad\rho_1(n)\ ,\ grad\rho_2(n)\ ,\ ...,\ grad\rho_6(n)]^T \qquad (7)$$

From the gradient vector *grad*P(n), a reactance vector X(n) of each of the passive antenna elements $14_1$ through $14_6$ can be defined by the following formula (8), where T denotes the transpose.

$$X(n) = [x_1(n), x_2(n), ..., x_6(n)]^T \qquad (8)$$

In this particular case, the steepest gradient algorithm is used as the optimizing algorithm. Accordingly, the reactance vector X should be formed so as to minimize the evaluation function.

An updated value X(n+1) of the reactance vector X at the nth try using the recursive relationship can be calculated based on the steepest gradient algorithm, according to the following formula (9), where μ denotes a step

size with which the convergence speed is controlled (the rate of updating the weighting is controlled).

$$X(n+1) = X(n) - \mu \, grad P (n) \quad (9)$$

In other words, in this embodiment, $\rho_m(n)$ and $\rho_0(n)$ of the mth passive antenna element (m = identification number 1, ..., 6 of the passive antenna element) for the nth try are obtained, and mutual correlation values are compared. If $\rho_m(n)$ is higher than $\rho_0(n)$, the reactance vector which minimizes the evaluation function is obtained by operating the reactance of the mth passive antenna element in a positive direction. On the other hand, if $\rho_0(n)$ is higher than $\rho_m(n)$, the reactance vector which minimizes the evaluation function is obtained by operating the reactance of the mth passive antenna element in a reverse direction, that is, in a negative direction. By successively carrying out the updating process with respect to the reactance vector in this manner, it is possible to optimize the reactances x1 through x6 of all of the passive antenna elements $14_1$ through $14_6$.

After updating the reactances of all of the passive antenna elements $14_1$ through $14_6$ according to the formula (9), the variable reactance control circuit 80 increments n by +1 in a step S12. Then, a step S13 decides whether or not n is greater than or equal to a predetermined repetition number N. If n has not reached the predetermined repetition number N and the decision result in the step S13 is NO, the process returns to the step S2. On the other hand, if the decision result in the step S13 is YES, the reactance control process of the variable reactance control circuit 80 with respect to the passive antenna elements ends.

As described above, the reactance control process of this embodiment samples the OFDM symbol by carrying out an 8-times over-sampling to obtain 512 samples. Thus, the perturbation time (or duration) per passive antenna element is shortened from 3.2 μs to 6.25 ns (= 3.2 μs/512). Consequently, it is possible to update the reactance of 6 passive antenna elements within the time of 1 symbol, and the convergence speed of the optimizing algorithm can be greatly increased compared to the conventional case.

In the embodiment described above, the correlation coefficient $\rho_m(n)$ is used as the evaluation function of the steepest gradient algorithm. However, the evaluation function is not limited to such, and the present invention may employ other functions such as an output power reference which is used as a reference for an output power of the array antenna. In this case, the output power of the array antenna is defined as the evaluation function, and a steering vector which indicates direction of arrival information of the desired wave is used in addition to the received signal and the output of the antenna array.

Next, a description will be given of a simulation result which is obtained by using this embodiment of the array antenna control apparatus. The simulation was carried out under the following simulation conditions, where λ denotes the wavelength and UCA denotes the Uniform Circular Array. FIGS. 10 and 11 show the simulation results which do not take noise into consideration, and FIGS. 12 and 13 show the simulation results for a case where the Signal-to-Noise Ratio (SNR) is 20 [dB].

Simulation Conditions:

Modulation Technique: OFDM
Arriving Wave Environment: 1 Desired Wave (0°) + 1 Interference Wave (100°)
Initial SIR: 0 [dB]
Angular Spread: None
Frame Format: In Conformance With IEEE802.11a Norm: MMSE
Optimizing Algorithm: Steepest Gradient Theory
μ: Step Size
No. of Passive Antenna Elements: 6
Pitch of Antenna Elements: λ/4 [m]
Antenna Arrangement: UCA (Circularly Arranged)
Sampling: 8-Times Over-Sampling
Perturbation Time of Variable Reactance: 6.25 [ns] (1/512 symbols)
Quantization: Ideal
Frequency Offset of Transmission & Reception: None

FIG. 10 is a diagram showing a convergence characteristic of the evaluation function $\rho_m(n)$ with respect to the number of tries, n, in a state where no noise exists. In FIG. 10, the ordinate indicates the evaluation function $\rho_m(n)$, and the abscissa indicates the number n of tries in 1 long training symbol time (4 μs). According to this simulation result, the convergence of the evaluation function $\rho_m(n)$ is observed by varying the step size μ. In FIG. 10, the smaller the value of the evaluation function $\rho_m(n)$, the faster the convergence speed of the optimizing algorithm. As shown in FIG. 10, the optimizing algorithm converges within several symbols depending on the step size μ. For example, the

convergence speed of the optimizing algorithm is the fastest when $\mu$ = 1000.

FIG. 11 is a diagram showing a horizontal directivity pattern of a state shown in FIG. 14 where a desired wave signal S (1 wave) arrives from a 0° direction and an interference wave I (1 wave) arrives from a 100° direction, in a state where no noise exists. FIG. 14 is a diagram showing a model of signal sources used in obtaining the simulation results for this embodiment of the array antenna control apparatus. In FIG. 11, the ordinate indicates a relative gain [dB], and the abscissa indicates the Direction Of Arrival (DOA), that is, the direction [deg] of the incoming (arriving) wave. As shown in FIG. 11, this embodiment of the array antenna control apparatus can adaptively control the array antenna so that the main directional beam is directed towards the desired wave and the null antenna directivity is directed towards the interference wave to null out the interference wave.

FIG. 12 is a diagram showing a convergence characteristic of the evaluation function $\rho_m(n)$ with respect to the number of tries, n, in a state where the SNR is 20 [dB]. In FIG. 12, the ordinate indicates the evaluation function $\rho_m(n)$, and the abscissa indicates the number n of tries in 1 long training symbol time (4 $\mu$s). According to this simulation result, the convergence of the evaluation function $\rho_m(n)$ is observed by varying the step size $\mu$, similarly to FIG. 10. In FIG. 12, the optimizing algorithm appears as if it converges within several symbols when the step size $\mu$ is large, but the convergence state is unstable due to the effects of the noise. Accordingly, the step size $\mu$ should be selected so that the effects of the noise becomes negligible. For example, the convergence speed of the optimizing algorithm is the fastest when $\mu$ = 1000.

FIG. 13 is a diagram showing a horizontal directivity pattern of the state shown in FIG. 14 where the desired wave signal S (1 wave) arrives from the 0° direction and the interference wave I (1 wave) arrives from the 100° direction, in the state where the SNR is 20 [dB]. In FIG. 13, the ordinate indicates a relative gain [dB], and the abscissa indicates the Direction Of Arrival (DOA), that is, the direction [deg] of the incoming (arriving) wave. As shown in FIG. 13, this embodiment of the array antenna control apparatus can adaptively control the array antenna so that the main directional beam is directed towards the desired wave and the null antenna directivity is directed towards the interference wave to null out the interference wave, even in an environment in which the noise exists.

As described above, according to the conventional method, the weighting of one passive antenna element is updated by use of one symbol, and a number of symbols corresponding to the number of antenna elements were required to update the weighting of all of the antenna elements. But in this embodiment, it is possible to update the weighting of six passive antenna elements by use of one symbol, thereby increasing the convergence speed of the optimizing algorithm.

In addition, by providing the variable reactance control circuit 80, which controls the weighting of the passive antenna elements, in a radio frequency (RF) processing part which includes the RF F/E section 42, it is possible to reduce the size and weight of the circuit and also reduce the power consumption and the cost of the circuit.

Furthermore, the reactance control process (updating process) with respect to the passive antenna elements may be realized by software operation, and in this case, it is possible to improve the maintainability. When realizing the reactance control process by software, the variable reactance control circuit 80 may be formed by a computer, that is, a processor such as a CPU.

In the embodiment described above, the time-based data obtained after perturbation of each of the passive antenna elements $14_1$ through $14_6$ is converted into the frequency-based data, and the correlation of the frequency-based data and a frequency-based known signal $d_\beta(m)$ is obtained. However, the present invention is not limited to such an embodiment, and it is possible to obtain other correlations. For example, a time-based known signal may be prepared, and the correlation of this time-based known signal and the time-based data obtained after the perturbation of each of the passive antenna elements $14_1$ through $14_6$ may be obtained.

According to the OFDM, the guard interval is added on the time base, and thus, the delayed wave within the guard interval can be received in a normal manner. The incoming delayed wave arriving within the guard interval is not necessarily one wave. Hence, the known signal may be generated by taking into consideration all incoming delayed waves arriving within the guard interval. In this case, if is possible to provide an impulse response estimating (or measuring) means to estimate (or measure) the impulse response to the propagation path, and to use this means to carry out a convolution with respect to the estimated (or measured) impulse response of the propagation path and the time-based known signal which is prepared in advance for a Fourier transform. The signal obtained by the Fourier transform may be used as the frequency-based known signal. As a result, it is possible to improve both the SNR of the OFDM signal and the reception characteristics.

The impulse response, which describes the instantaneous characteristics of the time-varying transmission path in the time-domain, is used to generate the known signal in the above described case. However, the known signal may be generated by other means, such as by use of a delay profile which statistically describes the instantaneous characteristics of the transmission path or, by use of a transfer function which describes the instantaneous characteristics of the transmission path in the frequency-domain.

In other words, the array antenna control apparatus may include a profile obtaining unit to obtain a delay profile statistically describing instantaneous characteristics of a transmission path, and a reference signal generator to generate a frequency-based reference signal which is described in a frequency-domain, by performing a Fourier transform on a time-based reference signal which is described in a time-domain and generated based on the delay profile. An adjusting part of the variable reactance control circuit 80 may define as the evaluation function a correlation coefficient which is obtained from a correlation of the frequency-based digital signal which is output from a base converter (which converts the time-based digital signal output from the A/D converter 52 into the frequency-based digital signal) and the frequency-based reference signal.

Alternatively, the array antenna control apparatus may include a profile obtaining unit to obtain a delay profile statistically describing instantaneous characteristics of a transmission path, and a reference signal generator to generate a time-based reference signal which is described in a time-domain, based on the delay profile. An adjusting part of the control unit may define as the evaluation function a correlation coefficient which is obtained from a correlation of a time-based digital signal which is output from the A/D converter 52 and the time-based reference signal.

In addition, the array antenna control apparatus may include a transfer function obtaining unit to obtain a transfer function describing instantaneous characteristics of a transmission path in a frequency-domain, and a reference signal generator to generate a frequency-based reference signal, based on the transfer function. An adjusting part of the variable reactance control circuit 80 may define as the evaluation function a correlation coefficient which is obtained from a correlation of the frequency-based digital signal which is output from a base converter (which converts the time-based digital signal output from the A/D converter 52 into the frequency-based digital signal) and the frequency-based reference signal.

Alternatively, the array antenna control apparatus may include a transfer function obtaining unit to obtain a transfer function describing instantaneous characteristics of a transmission path in a frequency-domain, and a reference signal generator to generate a time-based reference signal which is described in a time-domain, by performing a Fourier transform on a frequency-based reference signal which is described in a frequency-domain and generated based on the transfer function. An adjusting part of the variable reactance control circuit 80 may define as the evaluation function a correlation coefficient which is obtained from a correlation of the time-based digital signal which is output from the A/D converter 52 and the time-based reference signal.

In the embodiment described above, the known signal is generated by taking into consideration the 64 subcarriers. However, as described above, no all of the 64 subcarriers are used for the data transmission. Since the wave having a component in the virtual subcarrier which is not used for the data transmission is regarded as the interference wave, the effect of suppressing the interference wave can be improved by generating the known signal by taking into account the virtual subcarrier component. Therefore, the known signal may be generated by obtaining the correlation of the frequency-based known signal and the frequency-based signal after the perturbation of each of the passive antenna elements $14_1$ through $14_6$ and defining the correlation value as a portion of the evaluation function, and defining the subcarrier component which actually does not transmit data as the evaluation function.

Moreover, the impulse response to the propagation path may be estimated (or measured) by the impulse response estimating (or measuring) means described above, and the convolution may be carried out with respect to the estimated (or measured) impulse response of the propagation path and the time-based known signal which is prepared in advance, so as to use the time-based signal after the convolution as the known signal.

The known signal of the described embodiment is based on the PLCP preamble in conformance with the IEEE802.11a. But the known signal changes depending on the system, such as the HiSWAN, CSMA and HIPERLAN/2 which are broadband mobile access systems.

The present invention is applied to the array antenna which is formed by the active antenna element and the passive antenna elements, in the embodiment described above. However, it is of course possible to apply the present invention to array antennas having other structures, such as an adaptive array antenna which adjusts the phase and the amplitude of the incoming signals arriving at the plurality of antenna elements as antenna weights, and a phased array antenna which adjusts the amount of phase shift by a phase shifter.

The array antenna control apparatus described heretofore is applied to one array antenna part. However, the present invention is not limited to the application to the single array antenna part, and the present invention may be similarly applied to a case where a plurality of array antenna parts are arranged at predetermined distances and the array antenna parts are selected so as to form a space diversity structure, as in the case of the modifications described hereunder.

FIG. 15 is a diagram for explaining a weighting coefficient updating process which is carried out by selecting a diversity branch.

In FIG. 15, a plurality of array antenna parts having the structure shown in FIG. 4 are provided to form diversity branches (branches 1 through n) $15_1$ through $15_N$. The array antenna part of each of the diversity branches $15_1$ through $15_N$ includes antenna elements similar to those shown in FIG. 4 (that is, one active antenna element and a plurality of passive antenna elements), a weighting circuit part (variable reactance circuit part), and a variable reactance control circuit which calculates the weighting coefficients to be supplied to the weighting circuit part. The array antenna part may further include a radio frequency front end (RF F/E) section to receive outputs of the passive antenna elements, an analog-to-digital (A/D) converter and a Fourier transform section. In FIG. 15, a branch selector 90 is provided to select a branch outputting a largest signal level. The diversity branches $15_1$ through $15_N$ are separated by a sufficient distance so that the fading correlation becomes sufficiently small.

A radio signal transmitted from the OFDM transmitter of the other (transmitting) end is received by the diversity branches $15_1$ through $15_N$, and the branch which outputs the largest signal level is selected. The updating process to update the weighting coefficients is carried out with respect to the selected branch.

In this case, only the branch which outputs the received signal having the highest quality is selected, of the plurality of diversity branches, and the weighting coefficient updating process is carried out only with respect to the selected branch. In other words, the weighting coefficient updating process is a selective combining type. However, the weighting coefficient updating process may be an equi-gain combing type which makes the phases of the signals output from each of the diversity branches the same and adds the signals for use in the weighting coefficient updating process.

FIG. 16 is a diagram for explaining a weighting coefficient updating process which is carried out by combining the diversity branches.

In FIG. 16, signals from each of diversity branches (array antenna parts 1 through N) $16_1$ through $16_N$ are subjected to phase detection in a plurality of phase change detectors (only two phase change detectors 101 and 103 shown in FIG. 16), and phase errors of the signals are adjusted by a plurality of phase change compensators (only two phase change compensators 102 and 104 shown in FIG. 16) so that the phases of the signals become the same. The diversity branches $16_1$ through $16_N$ may have a structure similar to that of the diversity branches $15_1$ through $15_N$ shown in FIG. 15. The signals output from the diversity branches $16_1$ through $16_N$ and adjusted to have the same phase are added in a diversity combiner 110. An output signal of the diversity combiner 110 is supplied to the variable reactance control circuit of each of the diversity branches $16_1$ through $16_N$ to control the weighting coefficient updating process in each of the diversity branches $16_1$ through $16_N$. In this case, since the phases of the signals output from each of the diversity branches are adjusted to the same phase and the unadjusted amplitudes are then added, the reception characteristic can further be improved compared to the selective combining type described above.

The phase change detectors 101 and 103 and the phase change compensators 102 and 104 may carry out the processes digitally in FIG. 16. On the other hand, the phase change detectors 101 and 103 and the phase change compensators 102 and 104 may be provided within the radio frequency (RF) processing part which includes the RF F/E section 42, and in this case, the phase change detectors 101 and 103 and the phase change compensators 102 and 104 may carry out the processes in analog form.

By combining the array antenna control apparatus of the present invention with the space diversity structure, it is possible to updating the weighting coefficients at a high speed while simultaneously improving the transmission characteristics.

According to these modifications, the array antenna control apparatus of the present invention is applied to the space diversity structure. However, the present invention is of course similarly applicable to other diversity structures such as the polarization diversity structure which uses a plurality of reception antennas and the angular diversity structure.

Of course, the phase and amplitude of the incoming signal arriving at the antenna element may be adjusted so as to minimize or maximize the evaluation function.

Therefore, according to the array antenna control apparatus of the present invention, an 8-times over-sampling is performed with respect to the received signal so as to obtain 512 samples within 1 symbol time, and further, the passive antenna elements are perturbed for every sample to adaptively control the weighting coefficients of the passive antenna elements. Hence, the weighting coefficients of the passive antenna elements can be updated by 1 symbol, thereby enabling the convergence speed of the optimizing algorithm to be increased and the interference wave to be suppressed. In addition, it is also possible to reduce both the power consumption and the size of the array antenna control apparatus.

Further, the present invention is not limited to these embodiments, but various variations and modifications may be made without departing from the scope of the present invention.

## Claims

**1.** A method of controlling an array antenna part having a plurality of antenna elements arranged at a predetermined interval, comprising:

obtaining a predetermined evaluation function with respect to each of weighting coefficients to be applied to incoming signals arriving at a predetermined number of antenna elements, by perturbing each of the weighting coefficients at a sampling interval which is within one symbol time; and

adjusting each of the weighting coefficients based on the evaluation function.

**2.** The method of controlling the array antenna as claimed in claim 1, wherein the antenna part comprises one active antenna element to transmit and receive a radio signal, and a plurality of passive antenna elements, and variable reactances are loaded to the plurality of passive antenna elements, said method comprising:

converting an analog signal received by the active antenna element into a digital signal by oversampling the analog signal at a predetermined period; and
adjusting reactances of the variable reactances to minimize or maximize the evaluation function, by defining as the evaluation function a correlation coefficient which is obtained from a correlation of the digital signal and a known signal having a predetermined pattern.

**3.** The method of controlling the array antenna as claimed in claim 1, comprising:

adjusting phases and amplitudes of incoming signals arriving at the plurality of antenna elements;
converting analog signals received by the plurality of antenna elements into digital signals by oversampling the analog signals at a predetermined period; and
adjusting the phases and amplitudes to minimize or maximize the evaluation function, by defining as the evaluation function a correlation coefficient which is obtained from a correlation of the digital signals and a known signal having a predetermined pattern.

**4.** An array antenna control apparatus for controlling an array antenna part having a plurality of antenna elements arranged at a predetermined interval, comprising:

a control unit having a part to obtain a predetermined evaluation function with respect to each of weighting coefficients to be applied to incoming signals arriving at a predetermined number of antenna elements, by perturbing each of the weighting coefficients at a sampling interval which is within one symbol time, and a part to adjust each of the weighting coefficients based on the evaluation function.

**5.** The array antenna control apparatus as claimed in claim 4, wherein said control unit compares the evaluation function and a predetermined threshold value, and adjusts each of the weighting coefficients depending on a compared result.

**6.** The array antenna control apparatus as claimed in claim 4, wherein the antenna part comprises one active antenna element to transmit and receive a radio signal, and a plurality of passive antenna elements, and variable reactances are loaded to the plurality of passive antenna elements,
said array antenna control apparatus comprising:

an analog-to-digital converter to convert an analog signal received by the active antenna element into a digital signal by oversampling the analog signal at a predetermined period,
said control unit having an adjusting part to adjust reactances of the variable reactances to minimize or maximize the evaluation function, by defining as the evaluation function a correlation coefficient which is obtained from a correlation of the digital signal and a known signal having a predetermined pattern.

**7.** The array antenna control apparatus as claimed in claim 4, comprising:

an adjusting unit to adjust phases and amplitudes of incoming signals arriving at the plurality of antenna elements; and
an analog-to-digital converter to convert analog signals received by the plurality of antenna elements into digital signals by oversampling the analog signals at a predetermined period,
said control unit comprising an adjusting part to adjust the phases and amplitudes to minimize or maximize the evaluation function, by defining as the evaluation function a correlation coefficient which is obtained from a correlation of the digital signals and a known signal having a predetermined pattern.

**8.** The array antenna control apparatus as claimed in claim 7, comprising:

a radio frequency processing part coupled to the plurality of antenna elements, and including said adjusting unit.

**9.** The array antenna control apparatus as claimed in claim 7, wherein said adjusting unit adjusts the phases and the amplitudes digitally or in analog form.

**10.** The array antenna control apparatus as claimed in claim 4, comprising:

an adjusting unit to adjust phases of incoming signals arriving at the plurality of antenna elements; and
an analog-to-digital converter to convert analog signals received by the plurality of antenna elements into digital signals by oversampling the analog signals at a predetermined period,
said control unit comprising an adjusting part to adjust the phases to minimize or maximize the evaluation function, by defining as the evaluation function a correlation coefficient which is obtained from a correlation of the digital signals and a known signal having a predetermined pattern.

**11.** The array antenna control apparatus as claimed in claim 6, wherein said adjusting part of the control unit adjusts the reactances of the variable reactances to minimize or maximize the evaluation function based on a gradient vector of the correlation function.

**12.** The array antenna control apparatus as claimed in claim 7, wherein said adjusting part of the control unit adjusts the phases and the amplitudes to minimize or maximize the evaluation function based on a gradient vector of the correlation function.

**13.** The array antenna control apparatus as claimed in claim 4, wherein incoming signals arriving at the plurality of antenna elements have been transmitted by multicarrier transmission.

**14.** The array antenna control apparatus as claimed in claim 6, comprising:

base converter to convert a time-based digital signal which is described in a time-domain and output from said analog-to-digital converter into a frequency-based digital signal which is described in a frequency-domain,
said adjusting part of the control unit defining as the evaluation function a correlation coefficient which is obtained from a correlation of the frequency-based digital signal and a frequency-based known signal.

**15.** The array antenna control apparatus as claimed in claim 7, comprising:

base converter to convert a time-based digital signal which is described in a time-domain and output from said analog-to-digital converter into a frequency-based digital signal which is described in a frequency-domain,
said adjusting part of the control unit defining as the evaluation function a correlation coefficient which is obtained from a correlation of the frequency-based digital signal and a frequency-based known signal.

**16.** The array antenna control apparatus as claimed in claim 6, wherein said adjusting part of the control unit defines as the evaluation function a correlation coefficient which is obtained from a correlation of a time-based digital signal which is described in a time-domain and output from said analog-to-digital converter and a time-based known signal.

**17.** The array antenna control apparatus as claimed in claim 7, wherein said adjusting part of the control unit defines as the evaluation function a correlation coefficient which is obtained from a correlation of a time-based digital signal which is described in a time-domain and output from said analog-to-digital converter and a time-based known signal.

**18.** The array antenna control apparatus as claimed in claim 6, wherein the known signal is generated from a signal for transmitting control information within a frame employed by a predetermined system or protocol.

**19.** The array antenna control apparatus as claimed in claim 7, wherein the known signal is generated from a signal for transmitting control information within a frame employed by a predetermined system or protocol.

**20.** The array antenna control apparatus as claimed in claim 6, comprising:

an impulse response obtaining unit to obtain an impulse response of a transmission path; and
a reference signal generator to generate a frequency-based reference signal which is described in a frequency-domain, by performing a Fourier transform on a convolution of the impulse response and a time-based known signal which is described in a time-domain,
said adjusting part of the control unit defining as the evaluation function a correlation coefficient which is obtained from a correlation of a frequency-based digital signal which is output from said analog-to-digital converter and the frequency-based reference signal.

**21.** The array antenna control apparatus as claimed in claim 7, comprising:

an impulse response obtaining unit to obtain an impulse response of a transmission path; and
a reference signal generator to generate a frequency-based reference signal which is described in a frequency-domain, by performing a Fourier transform on a convolution of the impulse response and a time-based known signal which is described in a time-domain,
said adjusting part of the control unit defining as the evaluation function a correlation coefficient which is obtained from a correlation of a frequency-based digital signal which is output from said analog-to-digital converter and the frequency-based reference signal.

**22.** The array antenna control apparatus as claimed in claim 6, comprising:

an impulse response obtaining unit to obtain an impulse response of a transmission path; and
a reference signal generator to generate a time-based reference signal which is described in a time-domain, by performing a Fourier transform on a convolution of the impulse response and a time-based known signal,
said adjusting part of the control unit defining as the evaluation function a correlation coefficient which is obtained from a correlation of a time-based digital signal which is output from said analog-to-digital converter and the time-based reference signal.

**23.** The array antenna control apparatus as claimed in claim 7, comprising:

an impulse response obtaining unit to obtain an impulse response of a transmission path; and
a reference signal generator to generate a time-based reference signal which is described in a time-domain, by performing a Fourier transform on a convolution of the impulse response and a time-based known signal,
said adjusting part of the control unit defining as the evaluation function a correlation coefficient which is obtained from a correlation of a time-based digital signal which is output from said analog-to-digital converter and the time-based reference signal.

**24.** The array antenna control apparatus as claimed in claim 14, comprising:

a profile obtaining unit to obtain a delay profile statistically describing instantaneous characteristics of a transmission path; and
a reference signal generator to generate a frequency-based reference signal which is described in a frequency-domain, by performing a Fourier transform on a time-based reference signal which is described in a time-domain and generated based on the delay profile,
said adjusting part of the control unit defining as the evaluation function a correlation coefficient which is obtained from a correlation of the frequency-based digital signal which is output from said base converter and the frequency-based reference signal.

**25.** The array antenna control apparatus as claimed in claim 15, comprising:

a profile obtaining unit to obtain a delay profile statistically describing instantaneous characteristics of a transmission path; and
a reference signal generator to generate a frequency-based reference signal which is described in a frequency-domain, by performing a Fourier transform on a time-based reference signal which is described in a time-domain and generated based on the delay profile,
said adjusting part of the control unit defining as the evaluation function a correlation coefficient which is obtained from a correlation of the frequency-based digital signal which is output from said base converter and the frequency-based reference signal.

**26.** The array antenna control apparatus as claimed in claim 6, comprising:

a profile obtaining unit to obtain a delay profile statistically describing instantaneous characteristics of a transmission path; and
a reference signal generator to generate a time-based reference signal which is described in a time-domain, based on the delay profile,
said adjusting part of the control unit defining as the evaluation function a correlation coefficient which is obtained from a correlation of a time-based digital signal which is output from said analog-to-digital converter and the time-based reference signal.

**27.** The array antenna control apparatus as claimed in claim 7, comprising:

a profile obtaining unit to obtain a delay profile statistically describing instantaneous characteristics of a transmission path; and
a reference signal generator to generate a time-based reference signal which is described in a time-domain, based on the delay profile,
said adjusting part of the control unit defining as the evaluation function a correlation coefficient which is obtained from a correlation of a time-based digital signal which is output from said analog-to-digital converter and the time-based reference signal.

**28.** The array antenna control apparatus as claimed in claim 14, comprising:

a transfer function obtaining unit to obtain a transfer function describing instantaneous characteristics of a transmission path in a frequency-domain; and
a reference signal generator to generate a frequency-based reference signal, based on the transfer function,
said adjusting part of the control unit defining as the evaluation function a correlation coefficient which is obtained from a correlation of the frequency-based digital signal which is output from said base converter and the frequency-based reference signal.

**29.** The array antenna control apparatus as claimed in claim 15, comprising:

a transfer function obtaining unit to obtain a transfer function describing instantaneous characteristics of a transmission path in a frequency-domain; and
a reference signal generator to generate a frequency-based reference signal, based on the transfer function,
said adjusting part of the control unit defining as the evaluation function a correlation coefficient which is obtained from a correlation of the frequency-based digital signal which is output from said base converter and the frequency-based reference signal.

**30.** The array antenna control apparatus as claimed in claim 6, comprising:

a transfer function obtaining unit to obtain a transfer function describing instantaneous characteristics of a transmission path in a frequency-domain; and
a reference signal generator to generate a time-based reference signal which is described in a time-domain, by performing a Fourier transform on a frequency-based reference signal which is described in a frequency-domain and generated based on the transfer function,
said adjusting part of the control unit defining as the evaluation function a correlation coefficient which is obtained from a correlation of the time-based digital signal which is output from said analog-to-digital converter and the time-based reference signal.

**31.** The array antenna control apparatus as claimed in claim 7, comprising:

a transfer function obtaining unit to obtain a transfer function describing instantaneous characteristics of a transmission path in a frequency-domain; and
a reference signal generator to generate a time-based reference signal which is described in a time-domain, by performing a Fourier transform on a frequency-based reference signal which is described in a frequency-domain and generated based on the transfer function,
said adjusting part of the control unit defining as the evaluation function a correlation coefficient which is obtained from a correlation of the time-based digital signal which is output from said analog-to-digital converter and the time-based reference signal.

**32.** An array antenna control apparatus for controlling an array antenna part having a plurality of antenna elements arranged at a predetermined interval, comprising:

control means comprising means for obtaining a predetermined evaluation function with respect to each of weighting coefficients to be applied to incoming signals arriving at a predetermined number of antenna elements, by perturbing each of the weighting coefficients at a sampling interval which is within one symbol time, and means for adjusting each of the weighting coefficients based on the evaluation function.

**33.** A computer-readable storage medium which stores a program for causing a computer to control an array antenna part having a plurality of antenna elements arranged at a predetermined interval, said comprising:

a procedure causing the computer to obtain a predetermined evaluation function with respect to each of weighting coefficients to be applied to incoming signals arriving at a predetermined number of antenna elements, by perturbing each of the weighting coefficients at a sampling interval which is within one symbol time; and
a procedure causing the computer to adjust each of the weighting coefficients based on the evaluation function.

FIG.1 PRIOR ART

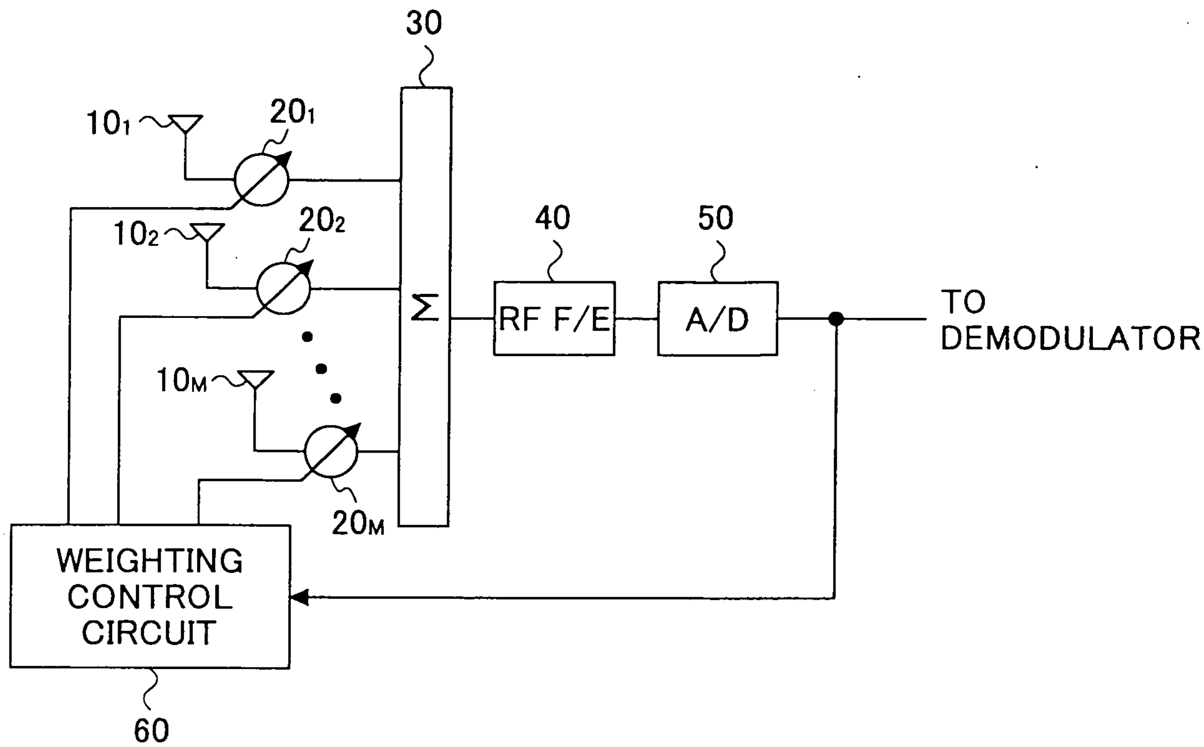

FIG.2 PRIOR ART

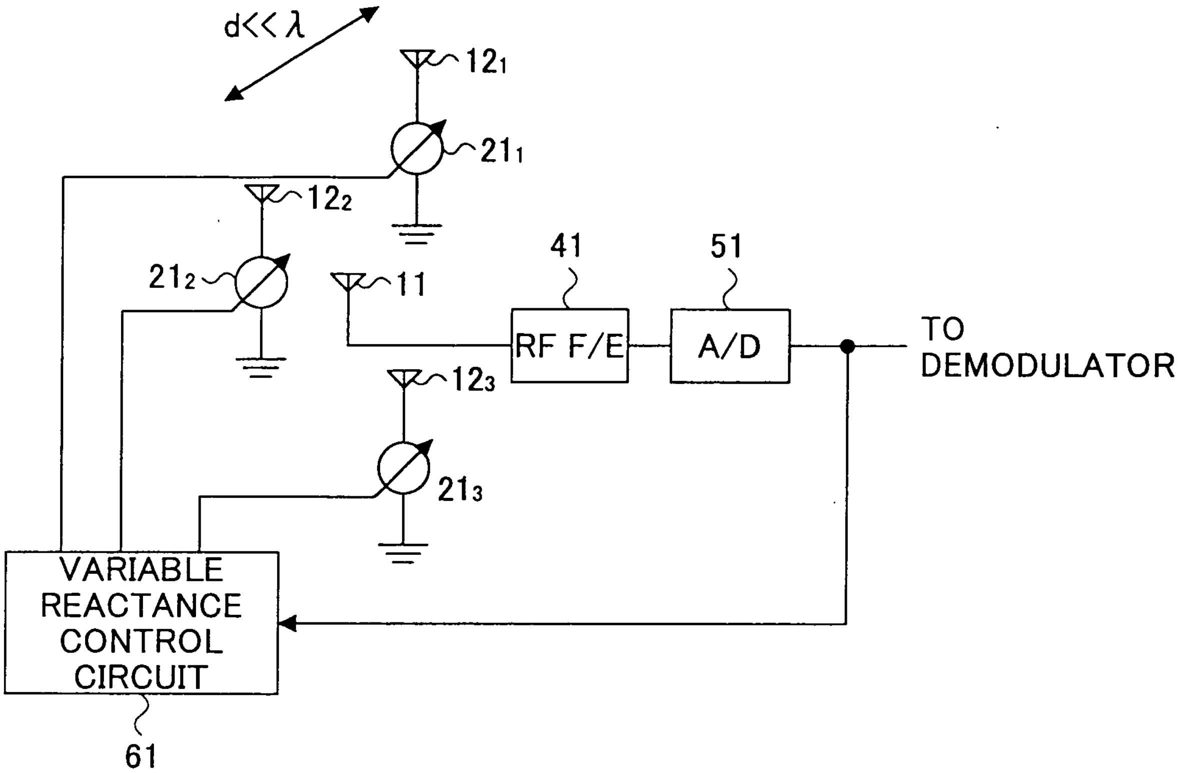


FIG.3 PRIOR ART

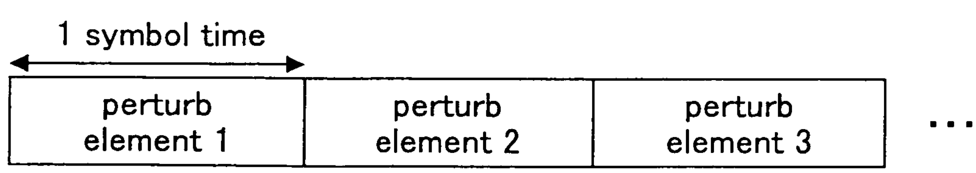

FIG.4

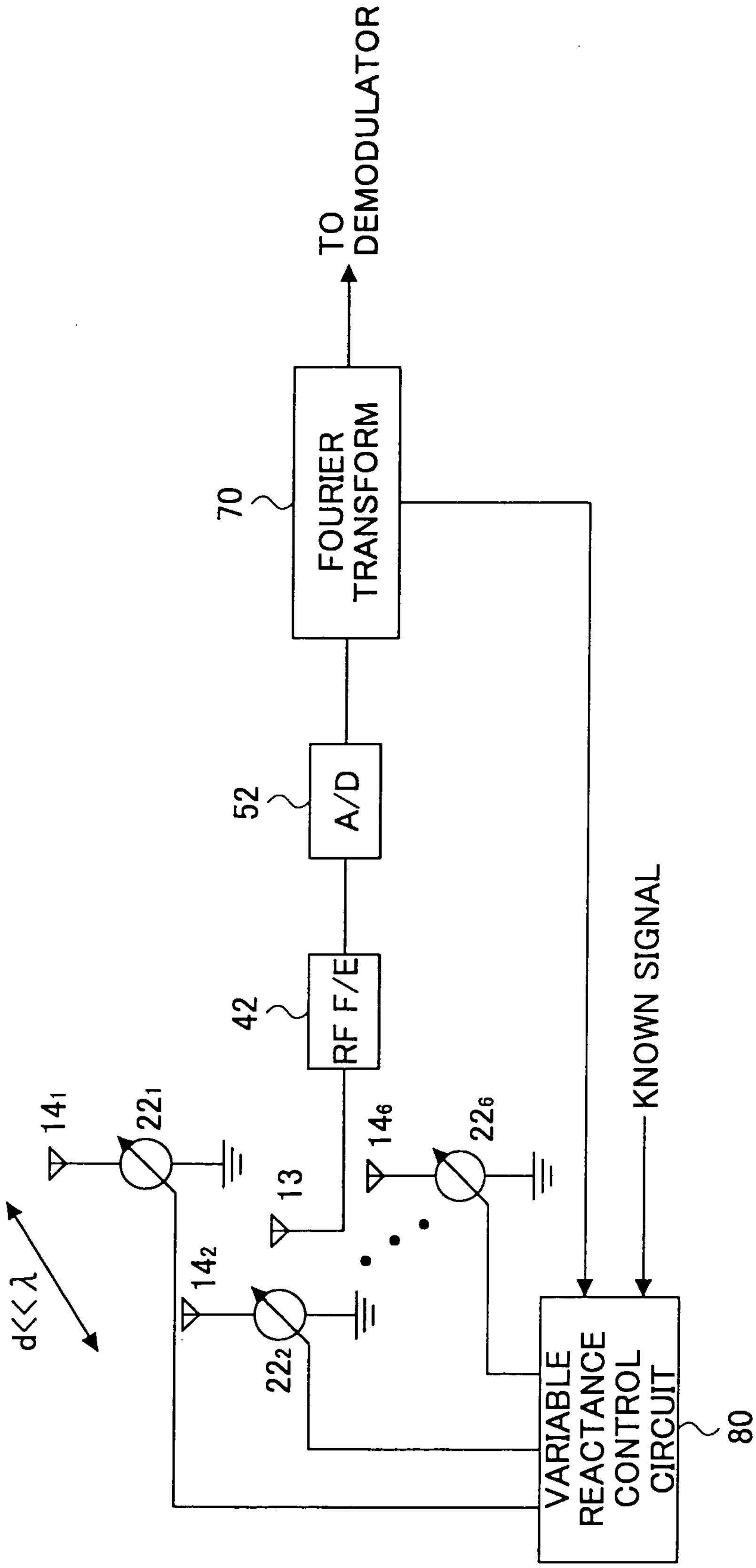
TO DEMODULATOR
FOURIER TRANSFORM
70
A/D
52
RF F/E
42
KNOWN SIGNAL
VARIABLE REACTANCE CONTROL CIRCUIT
80
d<<λ
14₁
22₁
13
14₆
22₆
14₂
22₂

FIG.5

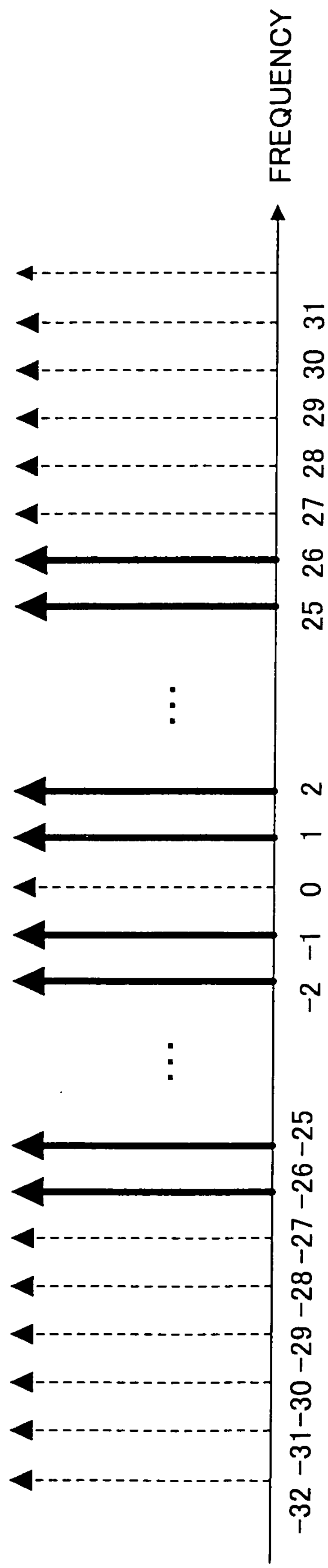

FIG.6

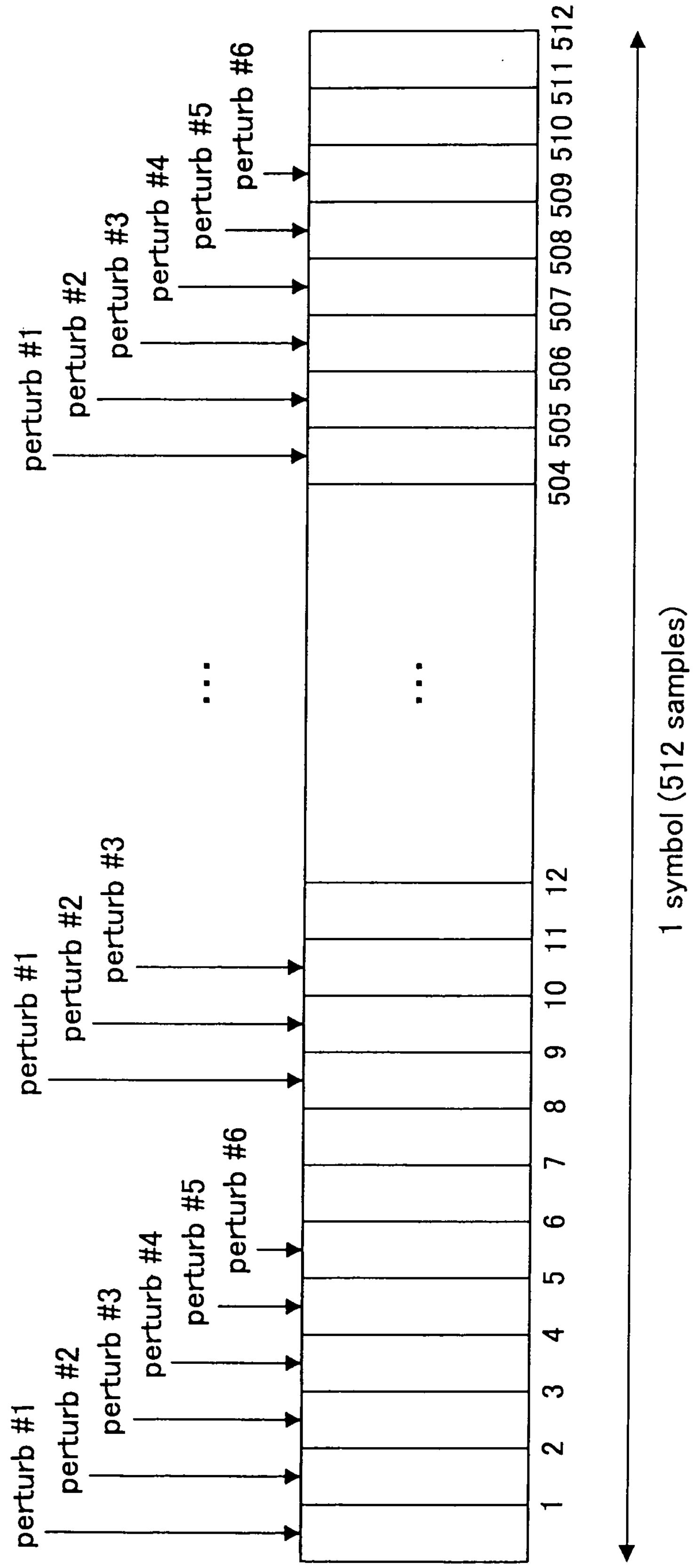
perturb #1
perturb #2
perturb #3
perturb #4
perturb #5
perturb #6
1 2 3 4 5 6 7 8 9 10 11 12
perturb #1
perturb #2
perturb #3
...
...
perturb #1
perturb #2
perturb #3
perturb #4
perturb #5
perturb #6
504 505 506 507 508 509 510 511 512
1 symbol (512 samples)

FIG.7

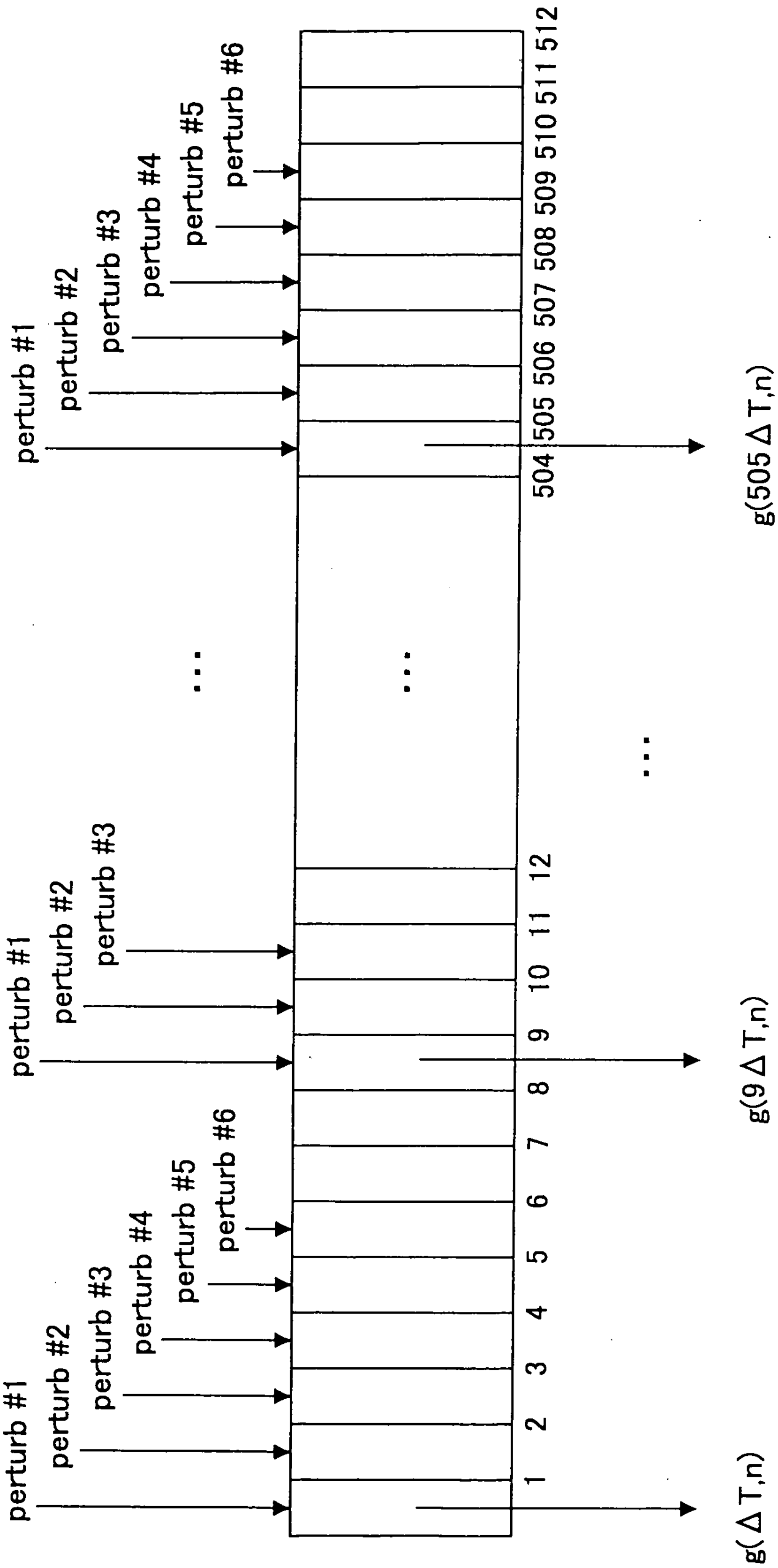
perturb #1
perturb #2
perturb #3
perturb #4
perturb #5
perturb #6
1
2
3
4
5
6
7
8
9
10
11
12
504
505
506
507
508
509
510
511
512
g(Δ T,n)
g(9 Δ T,n)
g(505 Δ T,n)

FIG.8

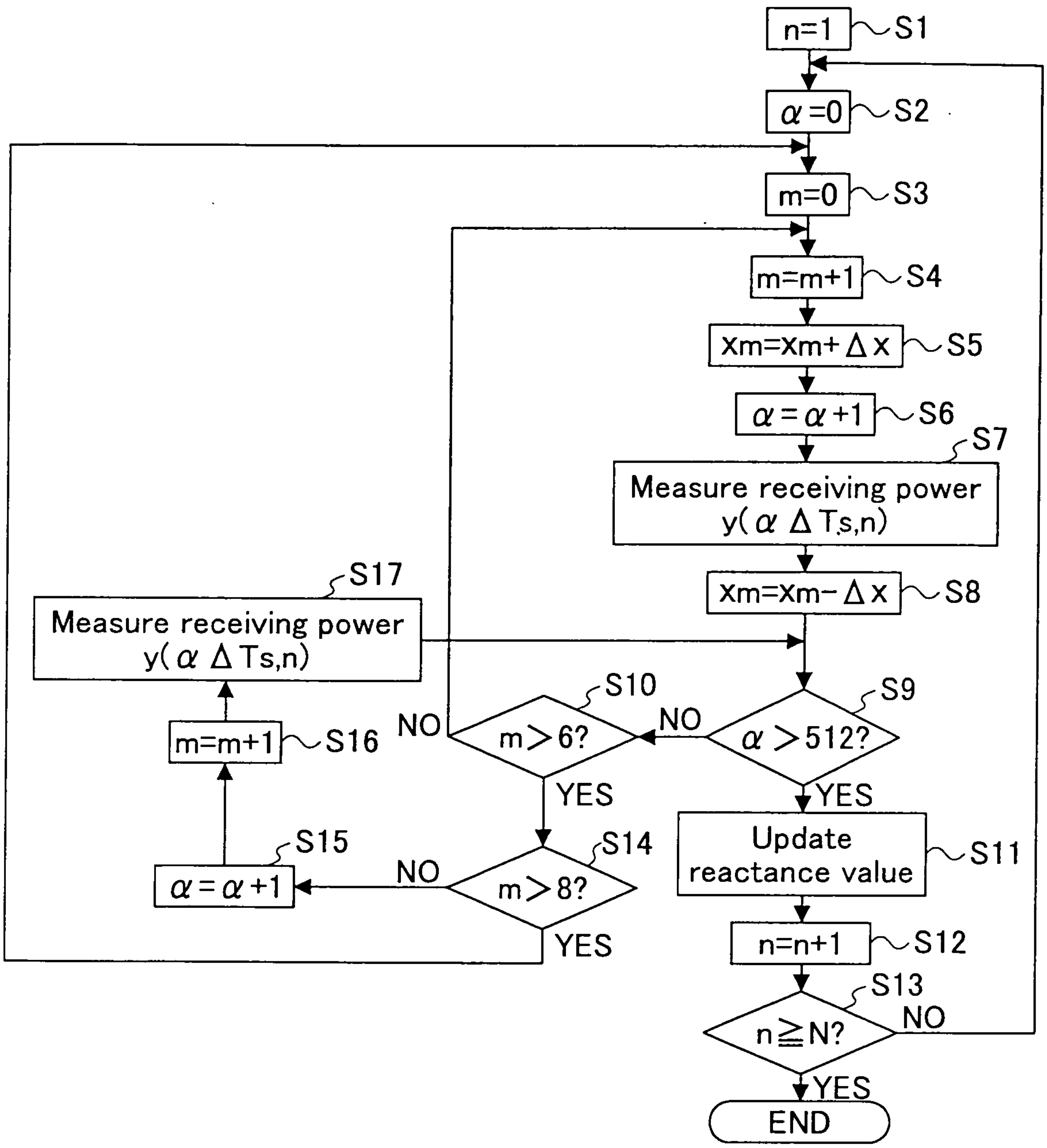
n=1
S1
α=0
S2
m=0
S3
m=m+1
S4
Xm=Xm+ΔX
S5
α=α+1
S6
S7
Measure receiving power
y(αΔTs,n)
Xm=Xm−ΔX
S8
S9
α>512?
NO
YES
Update
reactance value
S11
n=n+1
S12
S13
n≧N?
NO
YES
END
S10
m>6?
NO
YES
S14
m>8?
NO
YES
S15
α=α+1
m=m+1
S16
S17
Measure receiving power
y(αΔTs,n)

FIG.9

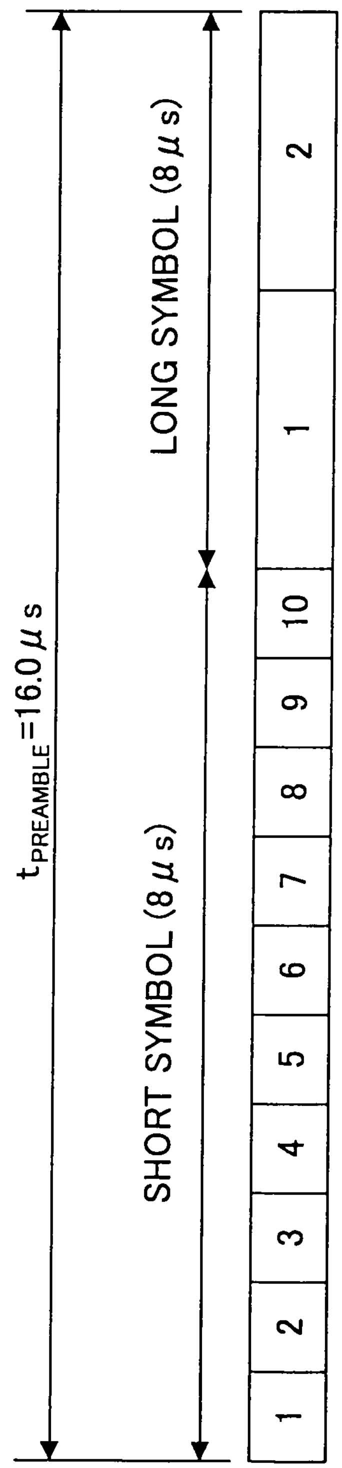
$t_{PREAMBLE}$=16.0 μs
SHORT SYMBOL (8 μs)
LONG SYMBOL (8 μs)
1
2
3
4
5
6
7
8
9
10
1
2

FIG.10

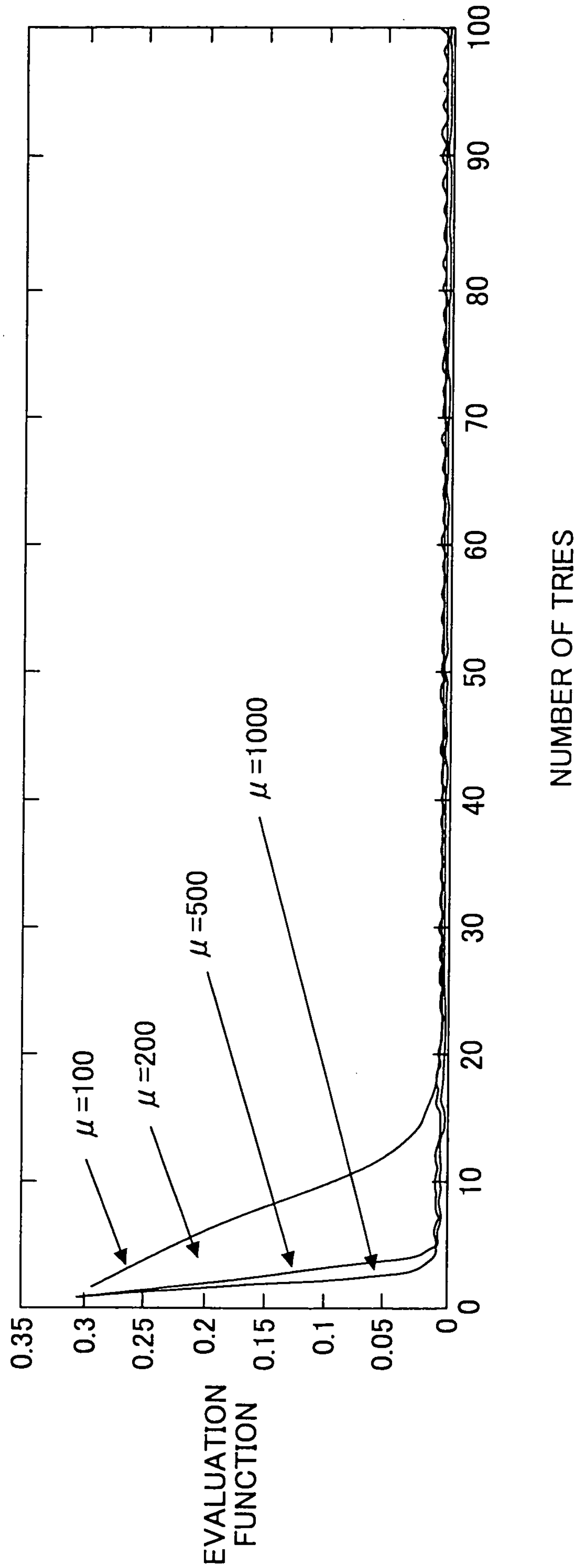
EVALUATION FUNCTION
0.35
0.3
0.25
0.2
0.15
0.1
0.05
0
NUMBER OF TRIES
0
10
20
30
40
50
60
70
80
90
100
μ=100
μ=200
μ=500
μ=1000

FIG.11

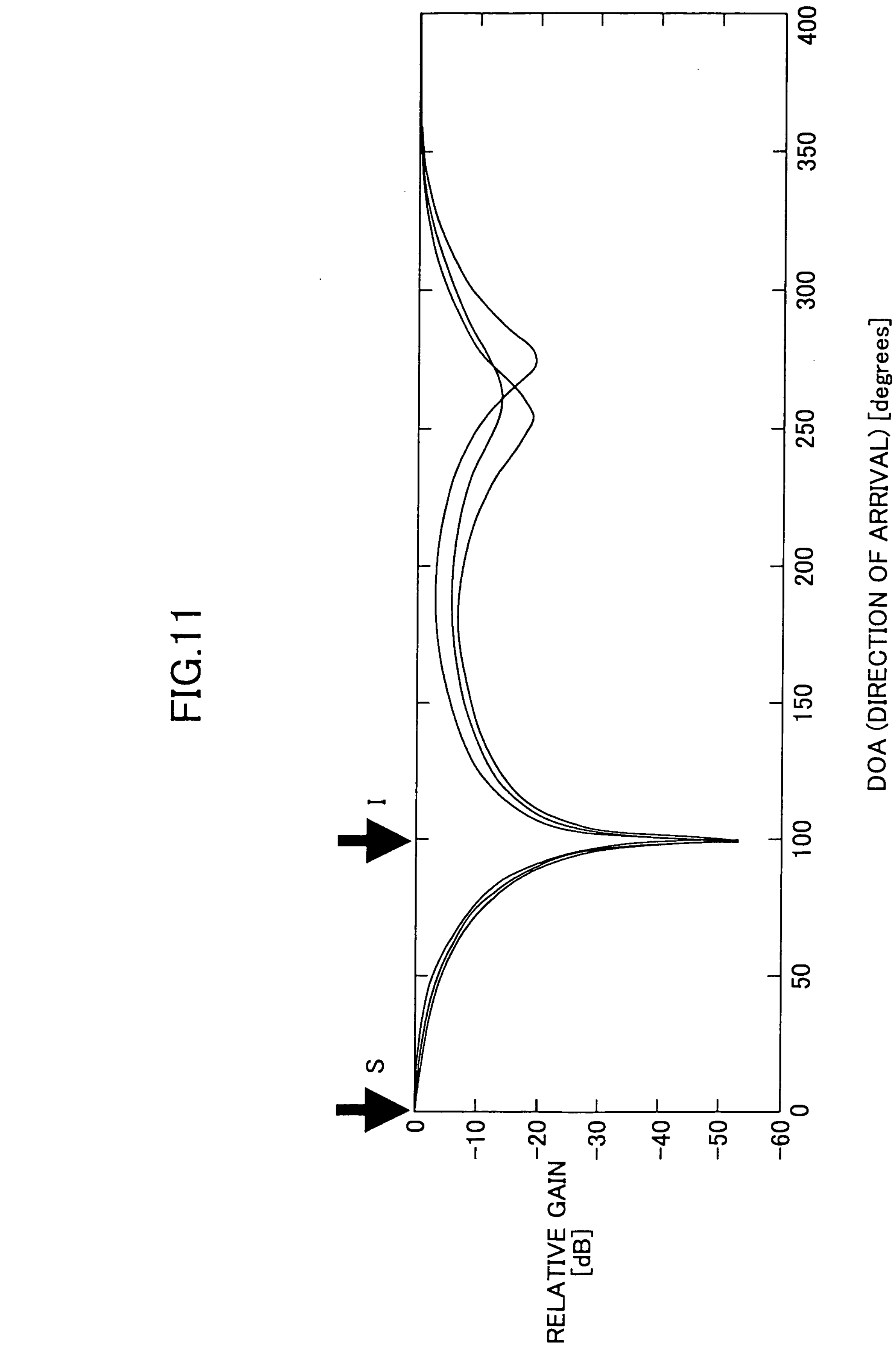
S
I
RELATIVE GAIN [dB]
0
-10
-20
-30
-40
-50
-60
0
50
100
150
200
250
300
350
400
DOA (DIRECTION OF ARRIVAL) [degrees]

FIG.12

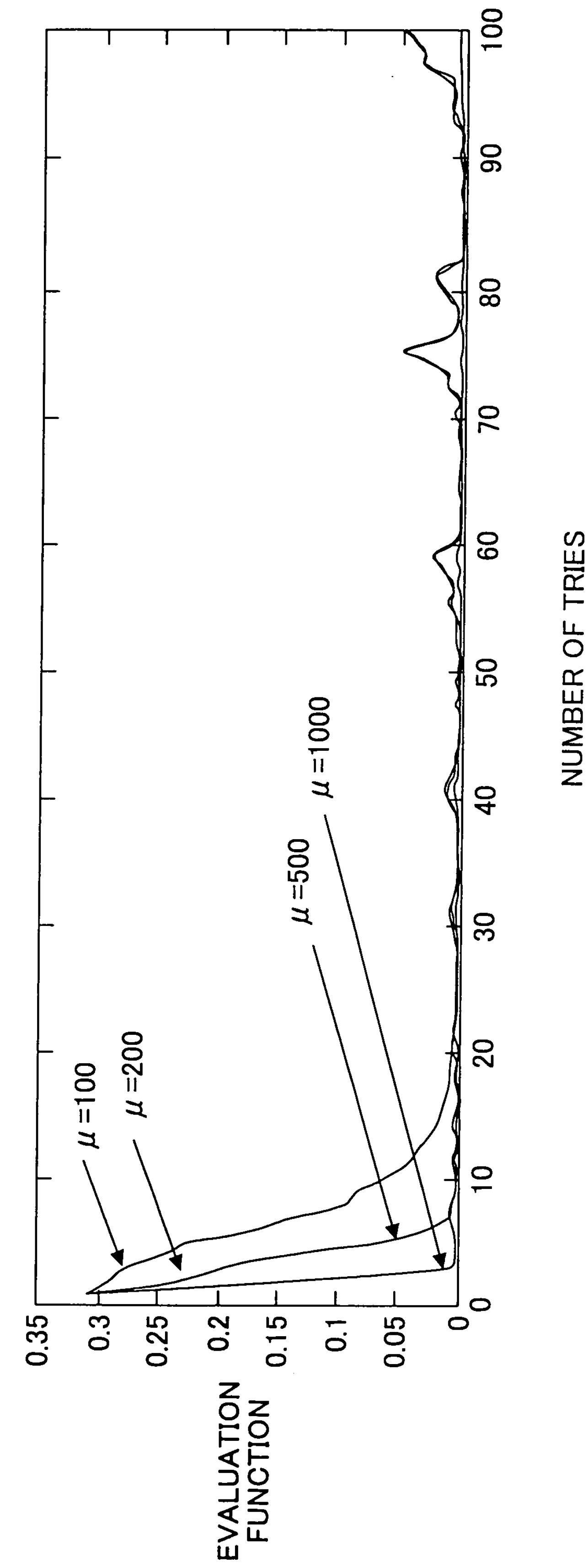
EVALUATION FUNCTION
0.35
0.3
0.25
0.2
0.15
0.1
0.05
0
0
10
20
30
40
50
60
70
80
90
100
NUMBER OF TRIES
μ=100
μ=200
μ=500
μ=1000

FIG.13

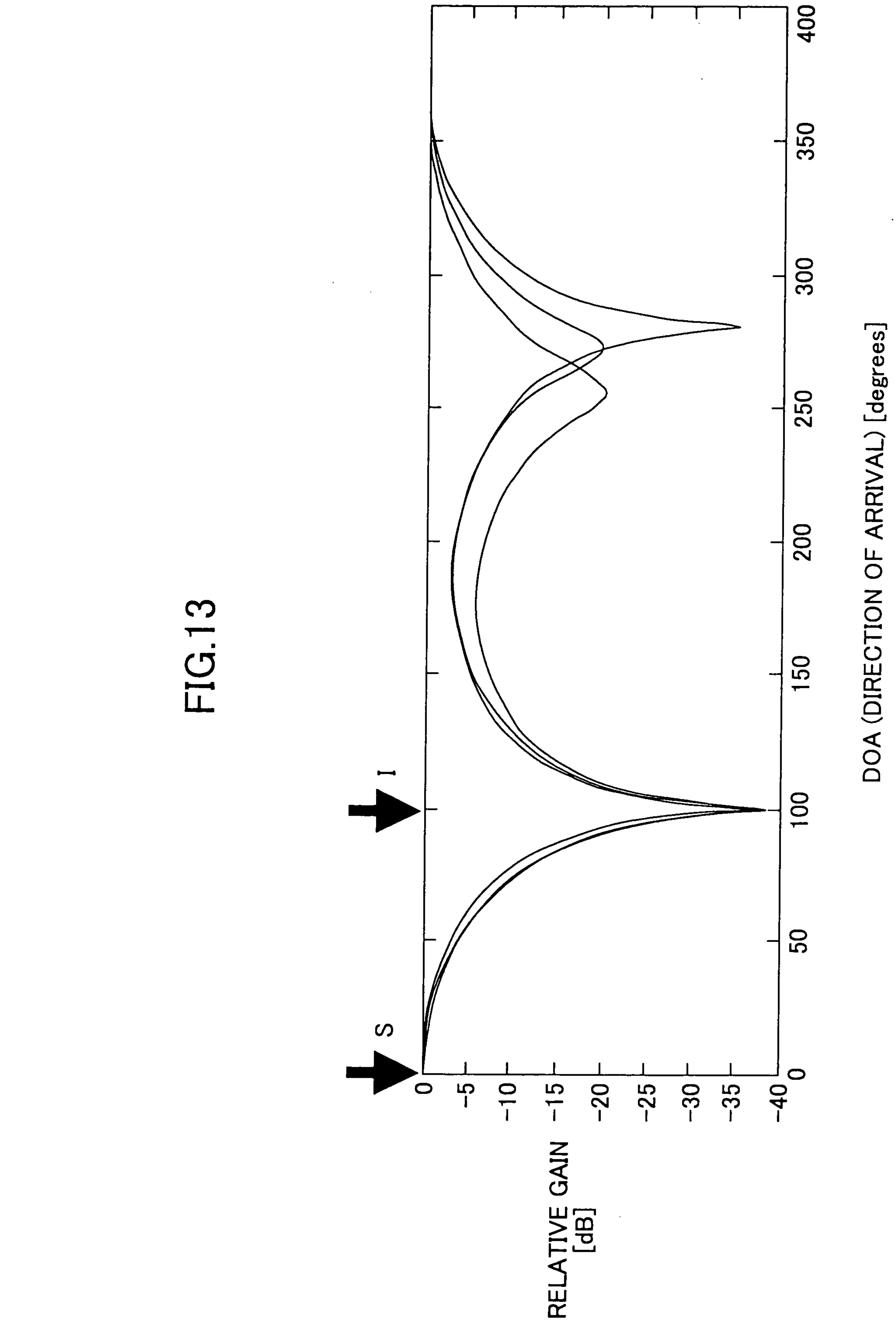
S
I
RELATIVE GAIN [dB]
0
-5
-10
-15
-20
-25
-30
-35
-40
0
50
100
150
200
250
300
350
400
DOA (DIRECTION OF ARRIVAL) [degrees]

FIG.14

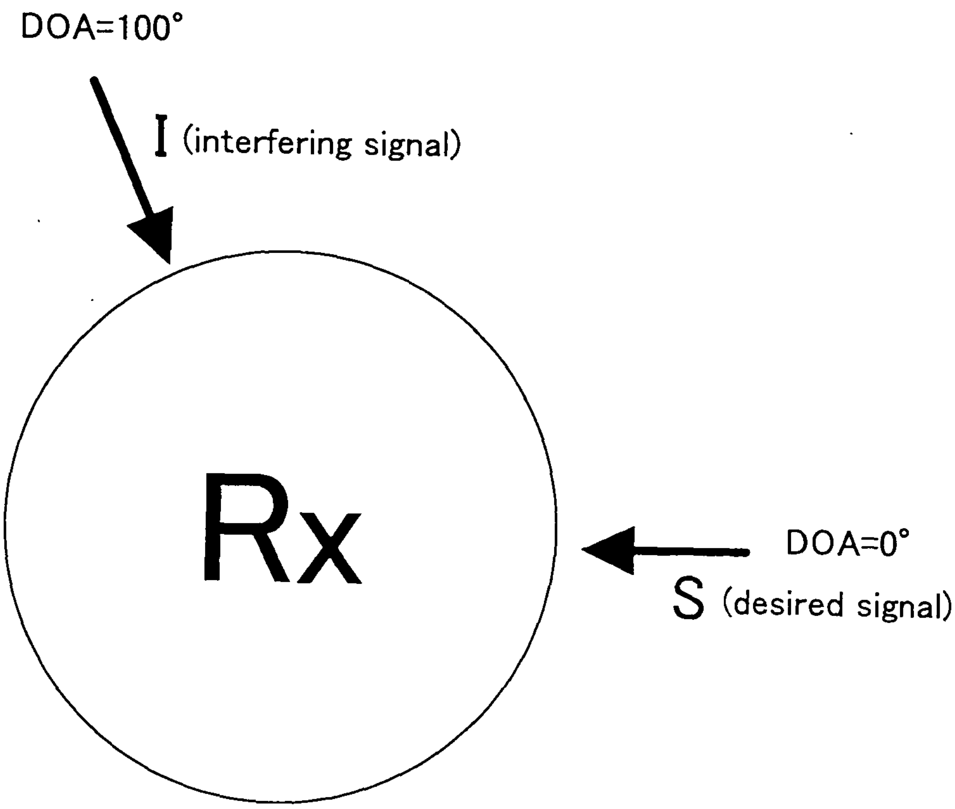

FIG.15

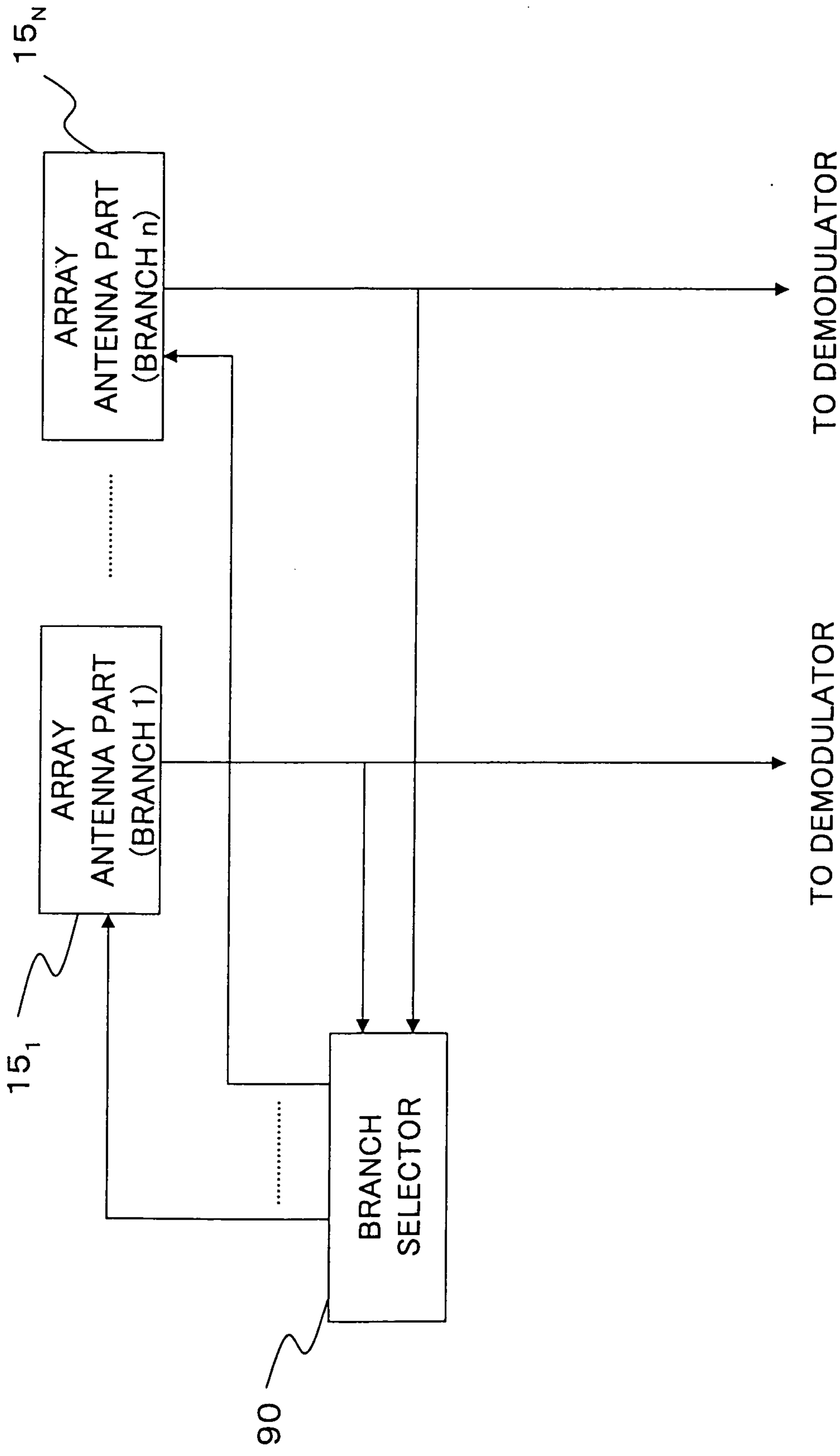
15N
ARRAY ANTENNA PART (BRANCH n)
TO DEMODULATOR
ARRAY ANTENNA PART (BRANCH 1)
TO DEMODULATOR
151
BRANCH SELECTOR
90

FIG.16

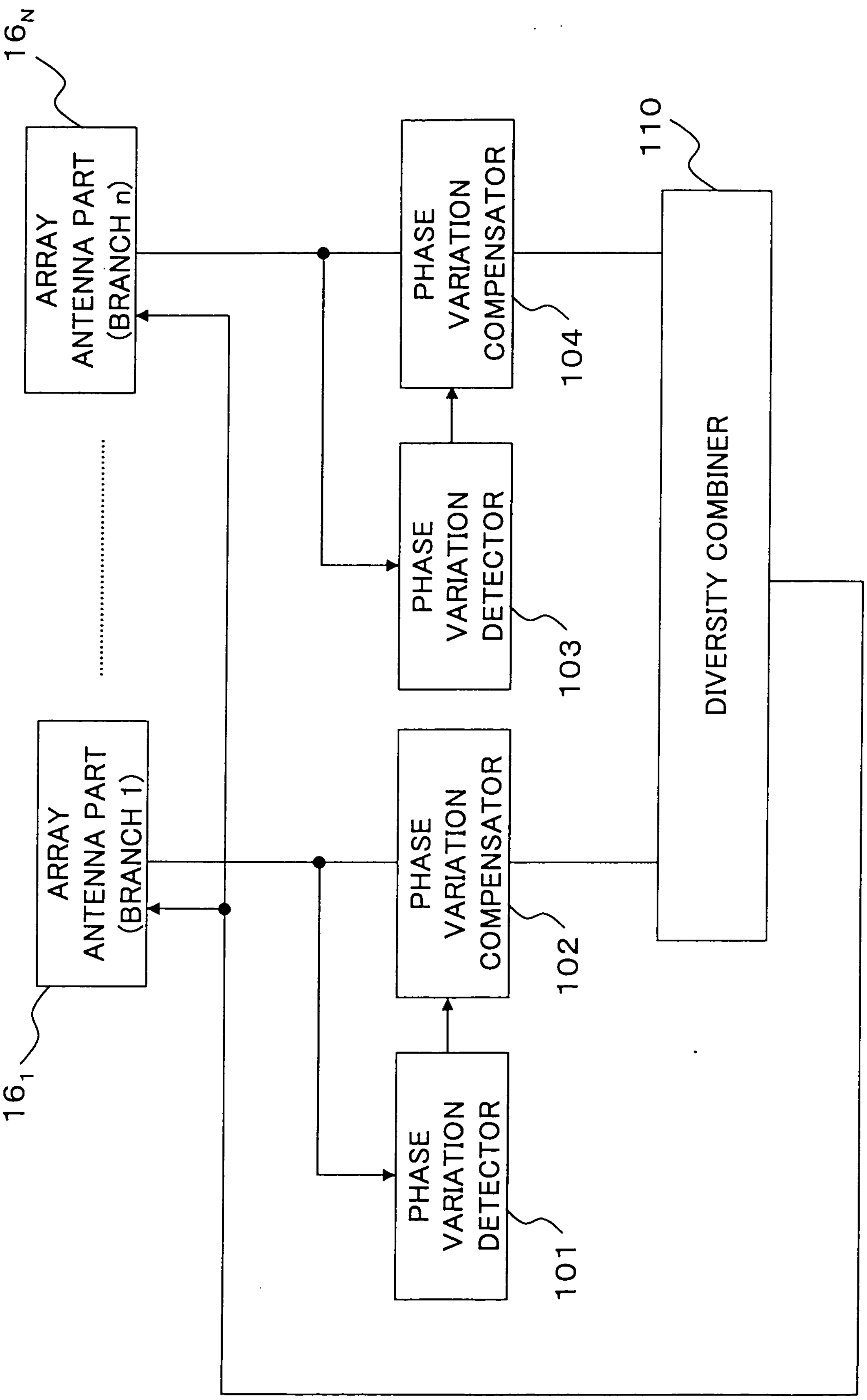
$16_N$
ARRAY ANTENNA PART (BRANCH n)
$16_1$
ARRAY ANTENNA PART (BRANCH 1)
PHASE VARIATION COMPENSATOR
104
PHASE VARIATION DETECTOR
103
PHASE VARIATION COMPENSATOR
102
PHASE VARIATION DETECTOR
101
110
DIVERSITY COMBINER